(19) Europäisches Patentamt / European Patent Office / Office européen des brevets

(11) **EP 3 556 098 B1**

(12) **EUROPEAN PATENT SPECIFICATION**

(45) Date of publication and mention of the grant of the patent:
**18.10.2023 Bulletin 2023/42**

(21) Application number: **17723439.0**

(22) Date of filing: **18.05.2017**

(51) International Patent Classification (IPC):
**H04N 19/103** $^{(2014.01)}$   **H04N 19/50** $^{(2014.01)}$
**H04N 19/159** $^{(2014.01)}$   **H04N 19/46** $^{(2014.01)}$
**H04N 19/593** $^{(2014.01)}$   **H04N 19/154** $^{(2014.01)}$
**H04N 19/156** $^{(2014.01)}$   **H04N 19/174** $^{(2014.01)}$

(52) Cooperative Patent Classification (CPC):
**H04N 19/159; H04N 19/103; H04N 19/154; H04N 19/156; H04N 19/174; H04N 19/46; H04N 19/50; H04N 19/593;** H04N 19/147; H04N 19/19

(86) International application number:
**PCT/EP2017/062042**

(87) International publication number:
**WO 2018/108330 (21.06.2018 Gazette 2018/25)**

(54) **ENCODER AND CONCEPT FOR CONFIGURING SAME**

CODIERER UND KONZEPT ZUR KONFIGURATION DAVON

CODEUR ET CONCEPT DE CONFIGURATION ASSOCIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.12.2016 EP 16204862**

(43) Date of publication of application:
**23.10.2019 Bulletin 2019/43**

(73) Proprietor: **Fraunhofer-Gesellschaft zur Förderung der angewandten Forschung e.V. 80686 München (DE)**

(72) Inventors:
• **HELLE, Philipp**
  **14129 Berlin (DE)**
• **SCHWARZ, Heiko**
  **16341 Panketal (DE)**
• **WIEGAND, Thomas**
  **14495 Berlin (DE)**
• **MÜLLER, Klaus-Robert**
  **12165 Berlin (DE)**

(74) Representative: **Schenk, Markus et al Schoppe, Zimmermann, Stöckeler Zinkler, Schenk & Partner mbB Patentanwälte Radlkoferstrasse 2 81373 München (DE)**

(56) References cited:
**CN-A- 105 306 947**

• **DUANMU FANYI ET AL: "Fast Mode and Partition Decision Using Machine Learning for Intra-Frame Coding in HEVC Screen Content Coding Extension", IEEE JOURNAL ON EMERGING AND SELECTED TOPICS IN CIRCUITS AND SYSTEMS, IEEE, PISCATAWAY, NJ, USA, vol. 6, no. 4, 1 December 2016 (2016-12-01), pages 517-531, XP011636920, ISSN: 2156-3357, DOI: 10.1109/JETCAS.2016.2597698 [retrieved on 2016-12-12]**
• **JILLANI R ET AL: "Low complexity intra MB encoding in AVC/H.264", IEEE TRANSACTIONS ON CONSUMER ELECTRONICS, IEEE SERVICE CENTER, NEW YORK, NY, US, vol. 55, no. 1, 1 February 2009 (2009-02-01), pages 277-285, XP011255287, ISSN: 0098-3063, DOI: 10.1109/TCE.2009.4814446**

• **CORREA GUILHERME ET AL: "Fast HEVC Encoding Decisions Using Data Mining", IEEE TRANSACTIONS ON CIRCUITS AND SYSTEMS FOR VIDEO TECHNOLOGY, IEEE, USA, vol. 25, no. 4, 1 April 2015 (2015-04-01), pages 660-673, XP011577264, ISSN: 1051-8215, DOI: 10.1109/TCSVT.2014.2363753 [retrieved on 2015-04-01]**

**Description**

The present application is concerned with a concept for configuring an encoder such as a video encoder, as well as an encoder fitting to such a concept.

In todays video compression systems, the encoder typically follows a search procedure to find an optimized syntax representation of the video signal. While primary optimization criteria are bit rate and image distortion, low complexity of this search may also be of importance in certain applications, making complexity a third optimization objective.

An example is disclosed in the following document: DUANMU FANYI ET AL: "Fast Mode and Partition Decision Using Machine Learning for Intra-Frame Coding in HEVC Screen Content Coding Extension", IEEE JOURNAL ON EMERGING AND SELECTED TOPICS IN CIRCUITS AND SYSTEMS, IEEE, PISCATAWAY, NJ, USA, vol. 6, no. 4, 1 December 2016 (2016-12-01), pages 517-531.

Video compression systems such as HEVC use a specific syntax to communicate a compressed description of the video signal from the encoder to the decoder. While for the decoder, predefined operations are mandatory to reconstruct the signal, the encoder is basically free to generate any valid description. A reasonable encoder therefore includes a search algorithm to find a description which is good in some sense. The criteria typically optimized for are bit rate and the distortion between reconstructed and original image signals (Rate-Distortion optimization). Given the diversity of possible descriptions, it is infeasible to find an optimal description for all but the smallest units of video sequence data. Thus, any practical encoder algorithm entails a trade-off between rate-distortion cost (RD-cost) and computational complexity.

Moreover, depending on the application, this trade-off needs to be controlled. For example in a real time application, the pictures of a video sequence must be processed with minimum delay. As time and other computational resources are limited in this setting, the encoder should wisely allocate them to optimize RD-cost.

There are many previous approaches trading RD-cost versus complexity. However, the learning based approaches known so far minimize a decision-error rate, which has the problem of ignoring individual error cost [3, 6].

It is the object of the present invention to provide a concept for configuring an encoder and an encoder configurable by use of the concept, so that a configuration may be done more effectively such as, but not exclusively, in terms of RD-cost versus complexity.

This object is achieved by the subject matter of the independent claims of the present application.

It is the finding of the inventors of the present application that a more effective configuration of an encoder for encoding a media signal in units of segments by encoding each segment by executing at least one of a set of encoder operations may be rendered more effectively if the encoder segmentally traverses at least a conditional subset of the set of encoder operations and makes, for each operation of the conditional subset, a decision on executing the respective encoder operation on the basis of a decision function. If the decision function indicates that the respective encoder operation is to be executed, the encoder executes the respective encoder operation so as to obtain a set of features and the arguments of the decision function on the basis of which the decision on executing the respective encoder operation is made comprises the sets of features obtained by the execution of preceding encoder operations. Then, the encoder determines which of an executed subset of the set of encoder operations results in a coded representation of the respective segment which is extremal in terms of a predetermined optimization criterion. The coded representation of the encoder operation thus determined is used for encoding the respective segment. The encoder thus prepared enables to be configured in a manner which trades off maximizing the predetermined maximization criterion on the one hand and some other criterion on the other hand, namely computational effort. In particular, in accordance with a further finding of the present inventors, configuring an encoder using reinforcement learning is feasible on the basis of training examples relating to a task of encoding a respective segment of a respective media signal, wherein each training example comprises for each of a set of encoder operations, a set of features obtained by executing the respective encoder operation with respect to the respective segment, a time consumed by executing the respective encoder operation with respect to the respective segment, and the coding efficiency value indicative of a coding efficiency of using the respective encoder operation to encode the respective segment into a coded representation in terms of the predetermined optimization criterion. A processor operates on a decision tree which corresponds to a sequence of decisions with respect to the set of encoder operations whether the respective encoder operation is to be executed or not so that nodes of the decision tree belonging to one tree level pertain to a decision with respect to one of the set of encoder operations, each node of the decision tree having associated therewith a decision function the value of which indicates whether the encoder operation associated with a tree level to which the respective node belongs is to be executed, and the attributes of which comprise the sets of features obtained by encoder operations for which the decision made according to the decision functions of intermediary nodes connecting the respective node with a root node of the decision tree, and the root node, indicates that the respective encoder operation is to be executed, wherein the processor is configured to operate on the decision tree by

determining a subset of the training examples for which, when applying current parameters of the decision functions of the nodes of the decision tree, the decision tree is traversed along a path of nodes so that the nodes of the path comprise a predetermined node;

determining for each of the subset of training examples

a first reward value for a first subpath traversed by applying the current decision function of the nodes of the decision tree within a first subtree of the decision tree having a first successor of the predetermined node, as a tree root node, and a second reward value for a second subpath traversed when applying the current decision function of the nodes of the decision tree within a second subtree of the decision tree having a second successor of the predetermined node as a tree root node,

wherein the first and second reward values are computed based on the times consumed and coding efficiency values of encoder operations for which nodes of the path from the root node up to the predetermined node, and nodes within the first and second subpaths, respectively, indicate that the respective encoder operation is to be executed,

determining optimized parameters for the decision function of the predetermined node which optimize a reward for the subset of training examples, on the basis of the first and second reward values determined for the subset of training examples, and

modifying the current parameters of the decision function of the predetermined node on the basis of the optimized parameters.

Advantages implementations of embodiments of the present application have the subject of dependent claims.

Beyond this, preferred embodiments of the present application are described below with respect to the figures among which

Fig. 1    shows a setting for reinforcement learning using which an embedment if which is explained;

Fig. 2    shows a schematic diagram illustrating the hierarchic nature of organizing encoder operations in accordance with an embodiment, the hierarchy levels of encoder operations addressing different hierarchy levels of a quad tree subdivision used to subdivide a current segment, i.e. the quad tree subdivision used for picture partitioning along with the corresponding nested decision episodes in the setting of Fig. 1;

Fig. 3    shows a schematic diagram of a binary decision tree as an example;

Fig. 4    to 6 show a set of algorithms and procedures of these algorithms, together realizing a method for configuring an encoder in accordance with an embodiment using a binary decision tree as shown in Fig. 3;

Fig. 7    shows a graph of BDR (Bjontegaard-Delta-Rate) measures for different preset maximum encoder durations, achieved with the method of Fig. 4 to 6;

Fig. 8    shows a schematic block diagram of an encoder according to an embodiment of the present application;

Fig. 9    shows a schematic block diagram of an apparatus for configuring an encoder according to an embodiment of the present application;

Fig. 10    shows a schematic diagram of a binary decision tree along with details for explaining the functionality of the apparatus of Fig. 9; and

Fig. 11    shows a schematic diagram of a non-binary decision tree for explaining the functionality of the apparatus of Fig. 9.

The following description starts with a specific outline of an embodiment of the present application with a special reference to HEVC as an example for an encoder environment or codec with respect to which the concept of the present application and encoders suitable therefore may be applied. With respect to this specific HEVC example, advantages of the present application in the embodiments of the present application I explained and the details set forth with respect to this example may also serve as a reservoir for implementation details which may be applied to the broader embodiments described subsequently.

Thus, the following description starts with a description of reinforcement learning for video encoding control in HEVC. As outlined above, the encoder typically follows a search procedure to find an optimized syntax representation of the video signal. While primary optimization criteria are bit rate and image distortion, low complexity of this search may also be of importance in certain applications, making complexity a third optimization objective.

According to the follwing embodiments, this problem is appoached by treating the encoding procedure as a decision process in time, making it amenable to reinforcement learning. The offline learning algorithm presennted hereinafter, computes a strategy in a compact functional representation, which is then employed in the video encoder to control its search. By including measured execution time into the reinforcement signal with a lagrangian weight, a trade-off between RD-performance and computational complexity controlled by a single parameter may be realized. The effectiveness of the approach is demonstrated by experimental results using the reference software test model (HM) of the HEVC video coding standard.

1. Reinforcement learning for video encoding control in HEVC

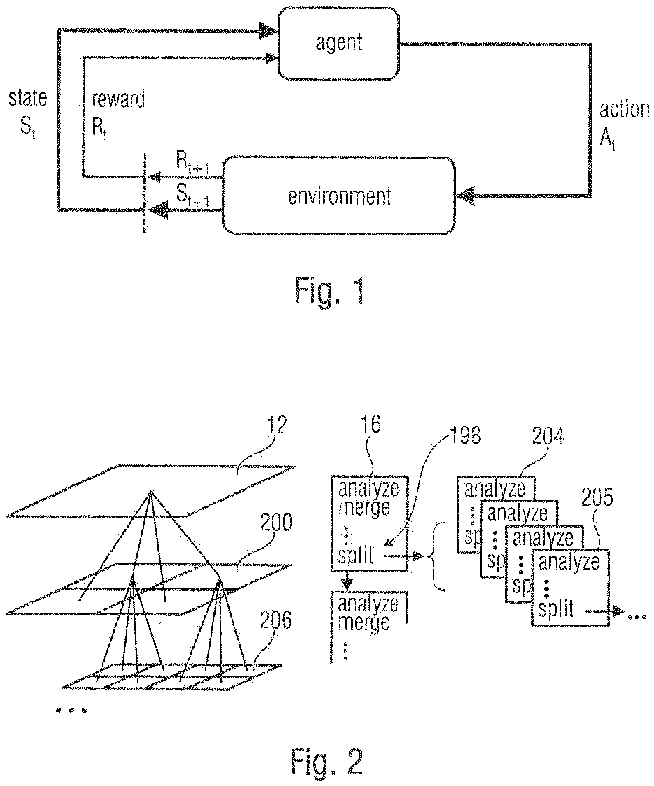

The concept described below distinguishes over learning based approaches which minimize a decision-error rate, which has the problem of ignoring individual error cost. The approach is to learn multiple dependent decisions in a cost sensitive way. To this end, an optimization objective is used that in addition to RD-cost, includes values to assess complexity such as execution time, of individual encoder operations. By weighting the complexity cost component with a lagrangian multiplier $\mu$, the configuration method thus presented provides control over the RD-cost/complexity trade-off achieved by the encoder-strategy learned. The problem is posed in the setting of reinforcement learning as depeicted in Fig. 1.

In the setting depicted in Fig. 1, an *agent* interacts with a possibly unknown dynamic *environment.* As a guidance for learning, it receives a *reward* signal and information about the the environments state. The agent's task is to learn a way of acting, i.e. a *policy,* which will maximize some measure of expected future reward.

The learning algorithm presented herein is inspired by the trajectory-tree method described in [4] and uses algorithms outlined in [5]. The presented algorithm uses large batches of data to make learning updates. It stops learning at some point and the resulting policy is hoped to generalize to previously unseen video content. This is in contrast to an online-, or active-learning algorithm which would learn from small portions of data and possibly continue to adapt forever. In this sense, the method presented herein can be classified as offline reinforcement learning.

The following section 2 describes how the HM encoder may be viewed as a learning-environment. The method of policy representation and search is outlined in the subsequent section 3. Sections 4 and 5 give experimental results and a conclusion, whereinafter the descriptino procedes with a presentation of more general embodiments for an configurable encoder and a concept for configuring same.

## *2 Encoder environment*

### 2.1 HM

By using a quad tree, HEVC divides a picture into square blocks of varying size, as depicted in Fig. 2. For each block, or Coding Unit (CU), the HEVC syntax provides many alternative description possibilities (or modes), which use e.g. different angular intra-prediction patterns or further rectangular sub-divisions for inter-prediction. The HM encoder searches these alternatives by calculating description length, or rate R, and reconstructed pixel distortion D for each, and then takes the one with minimal lagrangian cost $J = D + \lambda R$. While the quad tree is searched in a depth-first traversal order, this more or less brute-force search is run on every visited CU, resulting in a significant overall complexity.'More or less' has been said because HM already uses conditions to terminate the search early. For example, intra-modes are excluded and the quad-tree recursion is stopped when the quantized inter-prediction residual vanishes (i.e. the Cbf-flag is zero). However, these conditions are very simple and, heuristically, use values produced during the brute-force search anyway, like the Cbf-flag which is part of the CU description.

### 2.2 Reinforcement learning environment

The encoding procedure as seen in the following as a sequence of recurring decision episodes, each covering the search for one CU description. In each episode, a discrete number of operations $v_t$ is available, each of which calculates a vector of features $\mathbf{x}_t$. Additionally, an operation may provide a valid description for the CU together with $R$ and $D$ values. The operations and associated features are listed in Table 1. The features are defined as follows.

| Operation | | Features | | | | |
|---|---|---|---|---|---|---|
| Name | Index | R, D | H, V | Cbf | Esd | Spl |
| ANALYZE | 0 | | × | | | |
| MERGE | 1 | × | | × | × | × |
| INTER* | 2..8 | × | | × | | |
| INTRA | 9 | × | | | | |
| SPLIT | 10 | × | | | | |

Table 1 shows operations and features provided by the encoder environment. The * stands for any of 2Nx2N, 2NxN, Nx2N, 2NxnU, 2NxnD, nLx2N or nRx2N, i.e. there is one operation for each each of the different inter-prediction partitions used in HEVC.

**R, D**  $R$ is the description length in bits and $D$ is the sum of squared differences (SSD) between the original and reconstructed pixels.

**H, V**  The sum of squared differences between original pixels and their neighbors in horizontal ($H$) and vertical ($V$) directions, whithin the CU.

**Cbf**  The RQT-root-flag from HEVC syntax. It codes whether the CU has residual coefficient values other than zero or not.

**Esd**  A flag equal to the "early skip detection"-condition defined in [2].

**Spl**  A vector of two values calculated from $8 \times 8$ sub-block distortions $d_{k,i,j}$ of all tested merge-candidates. When $i,j$ index an $8 \times 8$ sub-block for candidate $k$, the two values are $SPL^{(0)} = \min_k \Sigma_{i,j} d_{k,i,j}$ and $SPL^{(1)} = \Sigma_{i,j} \min_k d_{k,i,j}$. The idea is that their difference is large when there a many different motion regions, which is indicative for a split decision.

The declaration in Table 1 defines the interface to the learning agent. In return to choosing an operation to execute, it receives the calculated features. At the end of an episode, the environment automatically accepts the best description (lowest $J$) tested by any of the executed operations.
By using these CU-level search functions already present in HM, this interface is implemented with only minor modifications to the software.
An important property of the operations is that within one episode, their outcome is independent on the order of their execution. As will be seen later, this is essential to enable the offline learning algorithm to explore and generate 'simulated experience' whithin a decision episode. Note that by treating a quad tree recursion step as one of the operations (SPLIT), the episodes also adopt this nested structure.
An additional piece of information provided by the environment is a variable $z$ = (*picType, QP, level, blockSize*), where *picType* $\in$ {0,1} stands for an intra- (1) or inter-predicted (0) picture, $QP \in$ {0..51} is the quantization parameter, *level* $\in$ {0..3} is the temporal-level in the GOP-8 (group of 8 pictures) temporal prediction structure, and *blockSize* $\in$ {8,16,32,64} is the width of the current CU. This context information may be relevant to making good decisions, since the relation of features and target-values is expected to strongly depend on it.
The encoder presented herein can enable an exploration mode that will store data $(x_{i,t}, j_{i,t}, c_{i,t})$ for all episodes $i$, where $t$ identifies the operation. Values $c_{i,t}$ are execution durations measured in microseconds by the function *gettimeofday*() from the GNU C-library (*sys/time.h*). Values $j_{i,t}$ are RD-cost values for operations that provide a description, and are equal to $+\infty$ for operations that don't (e.g. ANALYZE).
Note that while the exploration mode samples data for all available operations in a given domain $z$, encoder control is still faithful to the policy active in the agent.

### 3 Learning algorithm

The agent will use the variable $z$ (see section 2.2) to distinguish between a set of decision domains. As feature distribution is expected to strongly depend on $z$, the idea is to train a separate (expert) policy $\pi_z$ for each domain. At the same time, the role of these domains is to present borders to information flow, meaning that all observations made in a domain will only be used to make decisions within that domain.

The following two sections describe the structure and learning algorithm shared by all $\pi_z$.

## 3.1 Policy representation

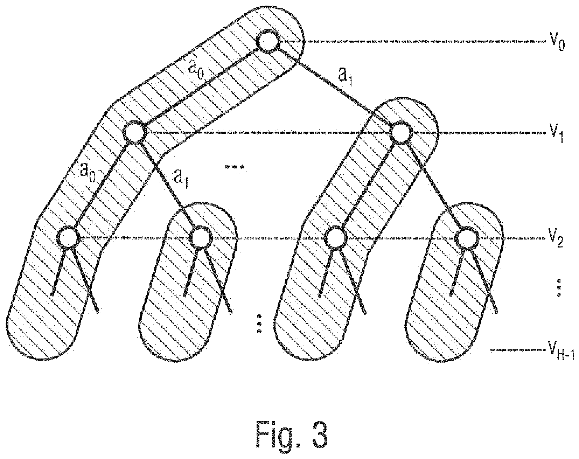

The policy structure used herein is best described by a binary tree as depicted in Fig. 3. Fig. 3 shows a binary trajectory-tree. The $a_1$-branches (right-hand branches in Fig. 3) execute an operation $v_t$ corresponding to tree level $t$. The $a_0$-branches (left-hand branches in Fig. 3) are just transitions internal to the agent and thus connect nodes sharing the same input data (gray regions). Each training example associates with the tree different reward values $r$ and input data $\mathbf{x}$.

Starting from the root node $s_0$, each level of the tree represents a point in time at which the policy chooses between two actions $a_0$ and $a_1$.

Assuming the decision domain has H encoder operations, the tree has height H and each tree level, or epoch $t \in \{0 \ldots H - 1\}$ corresponds to one operation $v_t$. While the $a_0$-branch from a parent node $s$ at level t does nothing but advance to the child node, the $a_1$-branch additionally executes operation $v_t$ in the encoder.

A policy now consists of a set of binary classifiers $g_s(\mathbf{x})$, one for each node s in the tree. The input $\mathbf{x}$ to a classifier at $t$ is simply the vector of all features output by operations executed in previous epochs. Note that x is identical for nodes connected by $a_0$-branches as no new information is revealed (see Fig. 3).

A decision function $g_s$ is defined by a hyperplane in feature space, where $\theta_s$ is the vector of learnable parameters.

$$g_s(\mathbf{x}) = \begin{cases} a_0, & \text{if } \theta_s^T \mathbf{x} < 0 \\ a_1, & \text{if } \theta_s^T \mathbf{x} \geq 0 \end{cases} \tag{1}$$

## 3.2 Optimization objective

The goal of reinforcement learning is to maximize expected future reward, which the presented learning algorithm estimates by an empirical reward on a set $\mathcal{M}$ of $M$ training examples. Each example creates a tree $T_i$, as each example assigns different input data and reward to the binary tree. The important point here is that the data in an example allows the learning algorithm to simulate any policy $\pi$ and obtain the reward $R(\pi, T_i)$ it accumulates on the tree. The overall quantity our algorithm seeks to maximize is the sum over these rewards (2).

$$\hat{V}^\pi(s_0) = \frac{1}{M} \sum_i R(\pi, T_i) \tag{2}$$

The ith example sampled from the encoder has data $(x_{i,t}, j_{i,t}, c_{i,t})$ with $t \in \{0 \ldots H - 1\}$. Using RD-cost values $j$ and complexity values c, we define a reward function $R(i, s, a)$ giving the immediate reward the agent receives for executing action $a$ at node s in tree $T_i$.

$$R(i, s, a) = R_j(i, s, a) + \mu R_c(i, s, a) \tag{3}$$

$$R_c(i, s, a) = \begin{cases} 0, & \text{if } t_s < H - 1 \wedge a = a_0 \\ -c_{i,t}, & \text{if } t_s < H - 1 \wedge a = a_1 \end{cases}$$

$$R_j(i, s, a) = \begin{cases} 0, & \text{if } t_s < H - 1 \\ -\min_{t \in E_s} j_{i,t}, & \text{if } t_s = H - 1 \wedge a = a_0 \\ -\min_{t \in E_s \cup \{t_s\}} j_{i,t}, & \text{if } t_s = H - 1 \wedge a = a_1 \end{cases}$$

While $t_s$ gives the epoch of s, $E_s$ is the set of previous epochs $t < t_s$ at which the $a_1$-branch was taken, i.e. $E_s$

is equivalent to the set of already executed operations. With this reward function, $R(\pi, T_i) = \Sigma_k R(i, s_k, a_k)$, where $s_k$ and $a_k$ represent the path taken by $\pi$ through $T_i$.

To maximize this reward, a policy has to find a balance between the two components $R_j$ and $R_c$, since executing more operations will raise complexity on the one hand, but can lower the minimum RD-cost on the other. To be able to control the trade-off targeted, a parameter $\mu$ is introduced, which weights the complexity component.

### 3.3 Policy search

With this structure, the learning algorithm can simply treat the decision process as having only two actions $a_0$, $a_1$ and states $s$ coinciding with the nodes of the binary trajectory-tree (see Fig. 3).

Let a decision-episode $i$ have epochs t = 0 ... H - 1, and $(x_t, j_t, \Delta t_t)$ be experience data for operation $v_t$ sampled from the encoder (section ??). Let $T_i$ be the corresponding trajectory-tree. For every tree node $s$ in epoch $t$, let $E$ be the set of previous epochs in which an operation was executed on the trajectory from the root to s, i.e. $E = \{t | a_t \in h\}$. A tree node is then identified by the tuple $(t, E)$. Using RD-costs and duration values, the reward function $R(t, E, a)$ is defined as a sum of two components in equation 3. Here a parameter $\mu$ is introduced to have control over the importance attributed to the complexity criterion.

To find a good policy, a decision problem has to be solved for each node in the binary tree. An important thing to note is that these problems have a circular dependency. While decisions on a parent node select which samples appear at which child node, decisions on a child node define the reward generated in the sub-tree and thus influence target values for parent decisions.

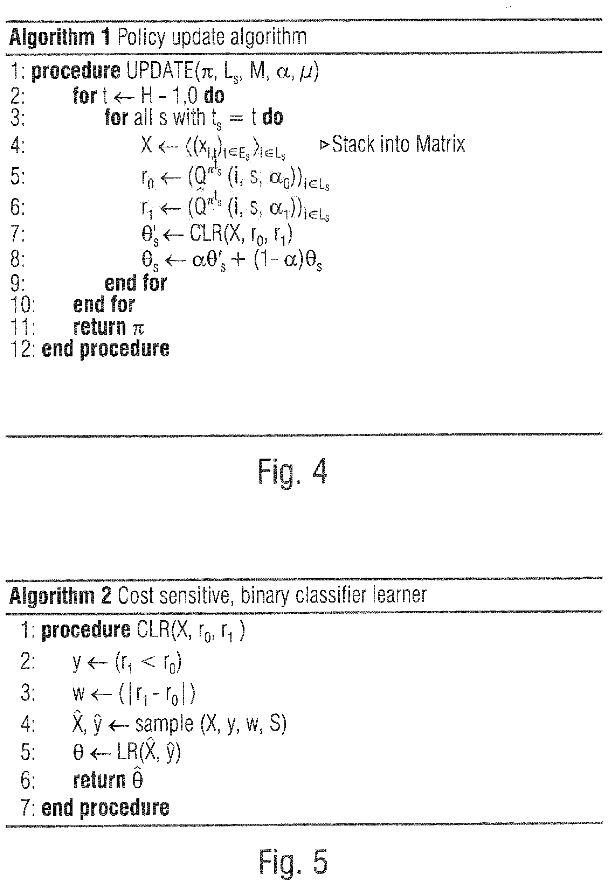

Taking account of this cycle, we use an algorithm *Algorithm*1 which is depicted in Fig. 4 and is for policy updating. Algorithm 1 updates classifiers one by one, each time assuming all other classifiers are fixed. For updating a single node, a training set is gathered by simulating the current policy on a subset of training examples. These sets are then fed to a separate classifier learner *CLR*. Firstly, it is described as to how training sets are collected.

With $\pi^t$, the part of the curent policy is denoted which consists of all classifiers $g_s$ with $t_s > t$. Target data for a learning problem on node s are the rewards obtained by forcing an action $a_0$ or $a_1$ in $s$ and then simulating $\pi^{ts}$ on the reached sub-tree. These rewards are given by the function $\hat{Q}^\pi(i, s, a)$ defined in (4), where $\hat{V}^\pi(i, s')$ is the reward accumulated by $\pi$ on the sub-tree with root $s'$, the successor of $s$ reached by $a$.

$$\hat{Q}^\pi(i, s, a) = \begin{pmatrix} R(i, s, a) + \hat{V}^\pi(i, s'), & \text{if } t_s < H - 1 \\ R(i, s, a), & \text{otherwise} \end{pmatrix} \tag{4}$$

A term $(x_t)_{t \in E}$ denotes the vector of all scalars $x_t$ indexed by a set E, or in case $x_t$ are vectors, concatenation of their elements into a single vector. The set $L_s \subseteq \{1.. M\}$ defines the sub-set of examples used to update node s. The parameter $0 \leq \alpha < 1$ controls the size of the classifier updates. Both parameters $L_s$ and $\alpha$ are controlled by the overall algorithm given in 3.4.

Once a training set is collected, algorithm 2 which is depicted in Fig. 5 is used to learn the classifier parameters. Algorithm 2, implements a cost sensitive, binary classifier learner. The *sample* operation creates a new training set $\hat{\mathbf{X}}, \hat{\mathbf{y}}$ by sampling a total of $S$ examples from $\mathbf{X}, \mathbf{y}$ with probabilities proportional to $w$, which is then fed to a base-learner LR. The values $\mathbf{w}$ weight the importance of individual examples such that the resulting decision function g maximizes reward. This is a black-box approach to make any binary classifier sensitive to an example-based classification cost [7].

For the base-learner LR, we use logistic regression with the cross-entropy loss function and a quadratic regularization term (5).

$$J(\theta) = C \sum_{i=1}^{M} Loss(x^{(i)}, y^{(i)}) + \sum_{k=1}^{n} \theta_k^2 \tag{5}$$

$$Loss(h_\theta(x), y) = \begin{pmatrix} -log(h_\theta(x)), & \text{if } y = 1 \\ -log(1 - h_\theta(x)), & \text{if } y = 0 \end{pmatrix} \tag{6}$$

$$h_\theta(x) = \frac{1}{1 + e^{-\theta^T x}} \tag{7}$$

Since $J$ is convex, there is only a single minimizer $\theta^*$ which can be approximated e.g. by gradient descent. The constant C controls regularization strength.

### 3.4 Overall algorithm

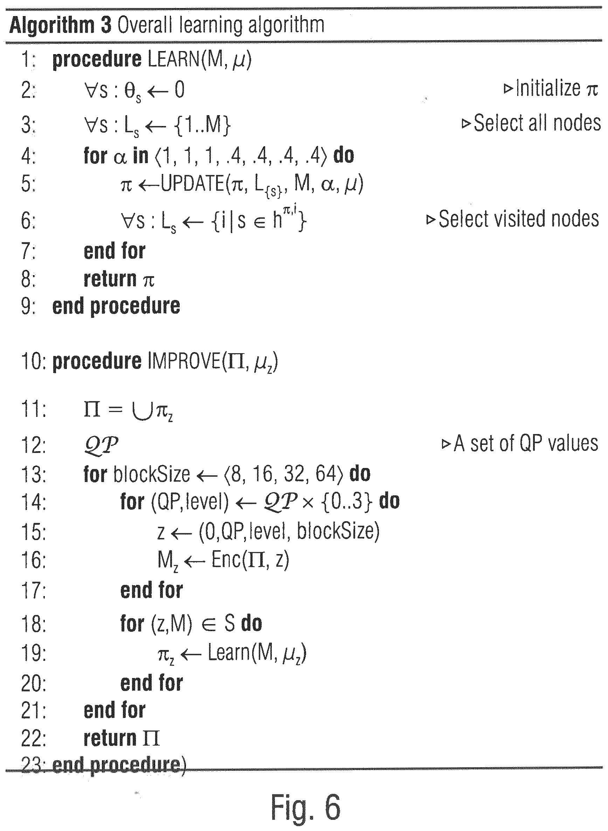

Learning a complete policy $\Pi$ proceeds as defined by the procedure Improve in **Algorithm 3** which, in turn, is shown in Fig. 6. Algorithm 3 represents the overall learning algorithm. The loop of Algorithm 3 samples data from the encoder *Enc* (in exploration mode, see section 2.2), each time using the partially learned policy. In each iteration, data are sampled from all domains with a certain *blockSize,* going from small to big blocks. This order is chosen so that RD-cost and time values for the SPLIT operation are sampled when the policy for the next smaller block size was already learned.

Using the sampled data $\mathcal{M}$ and a complexity weight $\mu_z$, the procedure Learn uses **Algorithm 1** to learn a policy $\pi_z$ in multiple rounds. By using $\alpha = 1$ and $L_s = \{1.. M\}\forall s$, the first round learns an initial set of classifiers on all nodes by considering all possible trajectories, which can be seen as an exploration step. As the sets $L_s$ are updated, subsequent rounds refine the classifiers by using only examples actually visiting the corresponding nodes under the policy learnt so far.

### 3.5 RD-cost versus complexity trade-off

In order to realize operating points with different RD-cost versus complexity trade-offs, one has to somehow choose suitable values for $\mu$.

An initial policy $\Pi_0$ is used to get started. This policy ignores all features and executes all available operations ($g_s(x) = a_1 \forall s$). In the following, we find suitable $\mu$ values on a grid defined by (8).

$$\bar{\mu}_k = 2^{(k-60)/3} \tag{8}$$

As a first step, a policy $\Pi_\varepsilon$ with $\mu = \overline{\mu_0}$ is learned. By using this very small value for $\mu$, $\Pi_\varepsilon$ has almost the same RD-performance as $\Pi_0$, but avoids wasting time. Thus, $\Pi_\varepsilon$ marks the beginning of the RD-cost/complexity trade off.

In a second step, data is collected with $\Pi_\varepsilon$ like in procedure Improve, but without updating the policy. Then, for each obtained ($z$, $\mathcal{M}$), procedure $Learn(\mathcal{M}, \bar{\mu}_k)$ is run for $k \in \{0..75\}$. For each $z$ and $k,$ the overall RD-cost $J_{z,k} = D_{z,k} + \lambda_z R_{z,k}$ incurred by the final $\pi_z$ on $\mathcal{M}$ is stored. Here, $\lambda_z$ is the lagrange multiplier used by the encoder for RD-optimization in domain $z$ (it is different for each *QP* and *level*). With $J_{z,\varepsilon} = D_{z,\varepsilon} + \lambda_z R_{z,\varepsilon}$ being the RD-cost for $\Pi_\varepsilon$ on $\mathcal{M}$ (i.e. before learning with $\overline{\mu_k}$), we calculate an estimated delta rate incurred by the learning step:

$$\Delta \hat{R}_{z,k} = \frac{(J_{z,k} - J_{z,\varepsilon})}{\lambda_z R_{z,\varepsilon}} \tag{9}$$

From these data, a table $\mu_z^{\Delta R}$ is obtained by picking the values closest to a certain target delta rate $\Delta R$.

$$\mu_z^{\Delta R} = \bar{\mu}_l, l = argmin_k |\Delta \hat{R}_{z,k} - \Delta R| \tag{10}$$

With these tables and the initial policy, different policies $\Pi_{\Delta R} = Improve(\Pi_\varepsilon, \mu_z^{\Delta R})$ can now be learned.

### *4 Experimental results*

### 4.1 Conditions

For experiments, HM version 16.6 in the Random-Access (RA) configuration defined by the common test conditions [1] has been used. These conditions specify a set of quantization parameter values $\mathcal{QP} = \{22,27,32,37\}$, which is used for training in the procedure Improve and for testing.

As a training set the data subset obtained by cropping the first 49 frames (6 GOPs) of each sequence to a center window of 960 $\times$ 960 pixels has been used. This sub set makes up about 4% of the overall data. After training, the learned policies on the complete set were tested. For all experiments *picType* = 0 has been used, i.e. new policies were learned only on inter-predicted pictures.

To compare RD-performance of different encoders, the Bjontegaard-Delta-Rate **(BDR)** measure has been applied, which for two RD-curves, summarizes the relative rate increment at equal distortion. In order to assess complexity of the created encoders, the execution duration of whole encoder runs has been measured.

To contain memory usage of the learning algorithm, a maximum of $M$ = 250000 training examples has been used, which are randomly sampled from the set of all examples when this number is exceeded. In the sampling step for cost sensitive learning, $S$ = 20000 has been used. The regularization weight for logistic regression is set to $C$ = 10000.

An important constraint made in the presented experiments is that the operations ANALYZE, MERGE and INTER2Nx2N are always executed, and their decision functions not updated during learning.

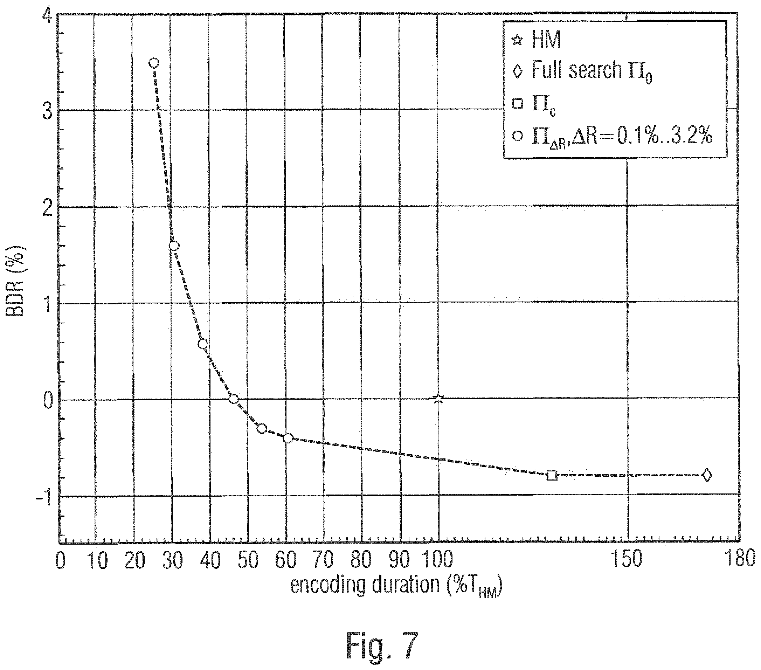

Fig. 7 shows operating points realized by HM 16.6, the full-search policy $\Pi_0$, $\Pi_\varepsilon$ and $\Pi_{\Delta R}$ for different targets $\Delta R$ = 0.1%, 0.2%, 0.4%, 0.8%, 1.6%, 3.2%.

It could be realized that when the motion estimation is allowed to be skipped entirely, performance degrades significantly. Presumably, this is due to to existing inter-block dependencies. For example, the merge-mode copies neighboring motion vectors and often has the lowest RD-cost. From the recorded data used, a greedy learner could conclude that using this mode exclusively is a good idea. However, this leads to a total break down since there would be no new motion vectors to copy. The algorithm presented is unable to learn such dependencies by design, as it does not propagate reinforcement between neighboring blocks.

### 4.2 Results

Fig. 7 shows the trade-off curve achieved by learning different policies $\Pi_{\Delta R}$ as explained in 3.5. The overall *BDR* values are obtained by averaging the values of individual sequences. The overall durations are sums over all encoder runs.

At the same RD-performance, around 54% overall encoding time is saved compared to HM. At the same complexity, *BDR* is estimated to be around -0.6%, while the full-search policy achieves -0.8%.

The policy with $\Delta R$ = 0.4% has the same RD-performance as HM on the test set. Table 2 shows time savings achieved by this policy for all test encoder runs.

When comparing this result to other work, we find that the most notable thing is the head start in *BDR* our method provides. All previous work we have seen starts at the RD-performance of HM, and then trades some of it to save time.

Table 2: Time savings over HM for different *QP*s.

| Sequence | | $1 - T/T_{HM}$(%) | | | |
|---|---|---|---|---|---|
| **QP** | | 22 | 27 | 32 | 37 |
| *Class A | Traffic | 60 | 65 | 72 | 77 |
| | PeopleOnStreet | 39 | 37 | 40 | 43 |
| *Class B | BQTerrace | 32 | 50 | 70 | 82 |
| | BasketballDrive | 52 | 56 | 62 | 67 |
| | Cactus | 46 | 54 | 61 | 68 |
| | ParkScene | 56 | 58 | 63 | 70 |
| | Kimono | 60 | 59 | 63 | 69 |
| *Class C | BQMall | 55 | 57 | 62 | 66 |
| | BasketballDrill | 53 | 51 | 54 | 58 |
| | PartyScene | 42 | 41 | 46 | 52 |
| | RaceHorses2 | 37 | 34 | 35 | 38 |
| *Class D | BQSquare | 42 | 47 | 61 | 74 |
| | BasketballPass | 42 | 41 | 42 | 45 |
| | BlowingBubbles | 42 | 42 | 47 | 52 |
| | RaceHorses 1 | 34 | 31 | 32 | 35 |

(continued)

| Sequence | 1 - $T/T_{HM}$(%) | | | |
|---|---|---|---|---|
| Average | 46 | 48 | 54 | 59 |

### 5 Conclusion

The method presented above allows to automatically learn complexity-scalable encoder strategies from video sequence data. Decisions are leart in a cost sensitive way, which allows to continuously control the RD-cost versus complexity trade-off. This capability is especially desirable for real-time encoding applications.

We think that framing the problem in the reinforcement learning setting opens a lot of directions for further research and improvements. For example, inter-block dependencies pose a big problem for encoders which is still largely ignored.

### 6 Enbroadening embodiments

The above description specifically referred to HEVC as an example for a concrete encoding codec, although embodiments of the present application may alternatively be applied onto other codecs as well. This means that a different set of encoder operations may form the basis. Likewise, the decision tree may be chosen differently, and many other parameters may be chosen differently as will get clear from the following description of broader embodiments. The details discussed above, however, may individually serve as a possible modification for the subsequently explained embodiment.

Thus, there has been described above a specific implementation of an encoder a more general embodiment of which is shown in Fig, 8 and which is configured to encode a media signal in units of segments: The media signal may be picture 10. The application is, however, not restricted to video coding, but could also relate to still picture coding. The picture 10, thus, needs not to be a picture of a video. Likewise, the segments 12, need not to be spatial fragments of a media signal. For example, the media signal could be an audio signal with the segments relating to temporal segments, or could be a 3D mesh with the segments relating to a portion thereof.

The encoder 14 is configured to encode each segment 12 by executing at least one of a set 16 of encoder operations 18 with respect to the respective segment 12. The encoder 14 may sequentially encode segments 12, or may encode segments 12 at least partially in parallel. The encoder 10 sequentially traverses at least a conditional subset 20 of the set 16 of encoder operations. In the above example, for instance, the first encoder operation ANANLYZE may be performed inevitably and may thus not belong to set 20. Any encoder operation not within set 20 might precede the ones of set 20 in terms of the order defined among the encoder operations of set 16 along which the sequential traversal is performed and with respect to which the determining of "previous executed encoder operations" takes place. For each encoder operation 18 of the conditional subset 20, the encoder 14 makes a decision on executing the respective encoder operation 18 on the basis of a decision function 22 and, if the decision function indicates that the respective encoder operation 18 is to be executed, executes 24 the respective encoder operation so as to obtain a set 26 of features 28, wherein the arguments 29 of the decision function 22 on the basis of which the decision 30 on executing the respective encoder operation is made comprise the sets of features obtained by the execution of preceding encoder operations. Further, the encoder 10 determines 32 at the end, such as after having performed the decision 30 for all encoder operations of set 20, which of a finally executed subset 37 of the set 16 of encoder operations results in a coded representation 36 of the respective segment 12 which is extremal in terms of a predetermined optimization criterion. That is, among those executed encoder operations which result in a coded representation 36 of the respective segment 12 - which may, in fact, from a subset of all executed encoder operations - the one is determined the coded representation 36 of the respective segment 12 of which is extremal in terms of the predetermined optimization criterion. It should be noted that the predetermined optimization criterion of the extremal determiner 32 or the decision function 22 needs not to be fixed. Rather, the decision function on the basis of which one of the available coded representations is chosen for the segment 12, i.e. the determination 32, could be varied between segments or from picture to picture or the like.

The encoder 10 uses the encoder operation determined by determiner 32 for encoding the respective segment meaning that the coded representation 36 of the encoder operation determined by the determiner 32 is chosen to be inserted into a final data stream 38 for representing the media signal 10.

As illustrated above with respect to SPLIT, the encoder may be configured to, with respect to at least one predetermined encoder operation of the set 16 of encoder operations, spatially divide the respective segment 12 into subsegments 40 and perform for each subsegment 40 the sequentially traversal and the determination with respect to a further set of encoder operations which may partially re-use some encoder operations of set 16. Such a predetermined encoder operation needs not to be a last one in the order among set 16, but may also be positioned elsewhere.

The decision function 22 may, as outlined above, be a linear inequality with parameters $\theta_s$ wherein the decision function and the corresponding parameters are different or specific for the encoder operations 18 and for the respective current subset of set 34 which encompasses the previously executed encoder operations among the set 37 of all executed encoder operations upon having completely traversed set 20. The set 26 of features 28 may vary depending on the encoder operation by which the set of features is obtained. This is exemplarily depicted in Table 1. The set 26 of features 28 may comprise one or more of (with the subset possibly depending on the encoder operation by which the set of features is obtained)

a length 42 of the coded representation 36 resulting from encoding the respective segment using the encoder operation from which the set of features is obtained, denoted **R** in section 2.2, which length 42 may be measured in any scale such as bits or any other measure,

an encoding error resulting from encoding the respective segment using the encoder operation from which the set of features is obtained, denoted **D** in section 2.2, which error may be measured in any scale such as SSD or any other measure,

a measure for a translation invariance of the respective segment, denoted **H,V** in section 2.2, here exemplarily using one measure separately for horizontal and vertical direction, or merely one of the directions, i.e. a measure measuring the self-similarity of the original media signal 10, such as the picture, with a translatorily displaced version of the respective segment with the self-similarity measured, for instance, in form of a SSD,

a flag indicating whether the encoder operation from which the set of features is obtained, results in a coded representation 36 into which a non-zero prediction residual of samples of the respective segment is coded, denoted **Cbf** in section 2.2, i.e. a flag indicating whether the coded representation codes the respective segment purely on the basis of prediction without prediction residual coding in form of, for instance, transform coefficient values, or whether the coded representation codes the respective segment on the basis of prediction plus prediction residual coding in form of, for instance, transform coefficient values,

a measure measuring a smallness of a coding error of the coded representation resulting from the encoder operation from which the set of features is obtained by adopting prediction modes used in a neighborhood of the respective segment, denoted **Eds** in section 2.2, wherein the measure may be a very rough estimate of the suitability of the respective segment to be coded by aid of adopting a neighboring prediction mode in terms of, for instance, resulting coding error and/or code rate, and even be binary valued, and

a set of one or more values indicative of a difference in a coding error resulting from, on the one hand, coding subsegments of the respective segment by adopting a common candidate of prediction modes used in a neighborhood of the respective segment, i.e. by adopting this candidate commonly for all subsegments, or, on the other hand, by adopting, for each subsegment individually, an individual candidate of prediction modes used in the neighborhood of the respective segment, denoted **Spl** in section 2.2; set of one or more values could relate to different subdivisions of the current (respective) segment, such as a subdivision into four equally shaped quadrants, a subdivision into two horizontally neighboring halves of equal size, a subdivision into two horizontally neighboring halves of unequal size, a subdivision into two vertically neighboring halves of equal size and/or a subdivision into two vertically neighboring halves of unequal size.

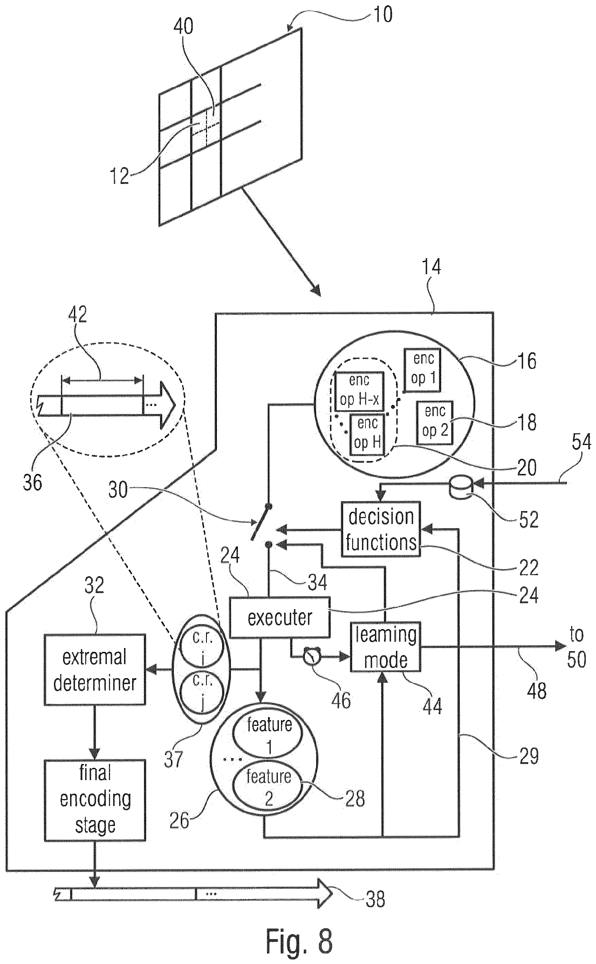

To be clear, it is noted that "one or more of" does not only refer to each set 26 individually, i.e. the fact the each set 26 may merely comprise a subset of the just-mentioned set of feature examples, but that the encoder of Fig. 8 may, relating to all possible sets 26, merely support a fraction of the listed feature examples.
As described above, there may be predetermined one 198 of the set 16 of encoder operations, called SPLIT in the above description, for instance, for which the encoder, when executing same in 34 with respect to a current segment 12 as shown in Fig. 2, spatially divides the respective segment 12 into subsegments 200 and performs for each subsegment 200 the sequential traversal with respect to a further set 204 of encoder operations, followed by determination 32, i.e. a competition. As depicted and illustrated in Fig. 2, more than one such hierarchy level transition may be realized, i.e. even set 204 may contain such predetermined encoder operation 205 leading itself to a further subdivision of a subsegment 200 into sub-subsegments 206. At the end, the determination 32 of the extremal coded representation 36 obtained by any executed encoder operation, in terms of, for example, RD-cost, is performed on segment level, i.e. for each segment 12 once. Here, all coded representations compete:

the coded representations 36 obtained by coding segment 12 in one unit as a whole as resulting from any executed representation-generating encoder operation of set 16 other than SPLIT, and

the concatenation of coded representations of all subsegments 200 of segment 12 as obtained by executing any of the subsegment related encoder operations of set 204 for the subsegments 200, other than SPLIT in case of sub-subsegments 206 being available, or , if available, the concatenation of coded representations of all sub-subsegments 206 and, if some subsegments 200 remain undivided, coded representations of all subsegments 200 into which segment 12 is subdivided or split, as obtained by executing any of the subsegment and sub-subsegment related encoder operations for the sub-subsegments 206, the concatenation being potentially accompanied with subdivision information indicating the split of the segment 12 into the subsegments 200 or subsegments 200 and sub-subsegments 206. This subdivision information may be composed of split flags or other partition information indicating the split/subdivision according to a quad or other multi-tree, for instance.

In other words, the SPLIT operation results in a coded representation with own RD-cost, for instance, which competes in 32 with the other coded representations of other executed encoder operations of set 20, and this coded representation is, in turn, the result of a similar processing as performed for segment 12 with respect to set 20, namely the processing transferred onto each subsegment 206 relating to set 204.

One could also, additionally or alternatively, use as features: depths of neighboring blocks in the CU-tree, motion vectors or other coding mode information of neighboring blocks. These could be output by the ANALYZE operation, for example.

The set 16 of encoder operations 18 comprises coding modes the execution of which results, in addition to the set 26 of features 28, in a coded representation 36 of the respective segment 12, wherein the conditional subset 20 comprises at least one of these coding mode like encoder operations, but optionally one or more encoder operations may exist which do not result into a coded representation such as ANALYSE, for instance. For the latter, the $j_{i,t}$ might be set to infinity or some adequate default value not influencing the determination of awards or even the determination 32 when the executed non-operation-mode encoder operations would be included in the process of minimizing a rate distortion measure being an example for the optimization criterion.

The predetermined optimization criterion in the above example was a linear combination of coding rate and coding distortion, namely $J = D + \lambda R$. As already indicate above, however, this "decision function" may be selected differently, and it may, additionally or alternatively, be variable and may be learned, for instance. In addition to the normal encoding mode, described above, the encoder 14 may comprises a learning mode 44, wherein the encoder 10 is configured to, if being in the learning mode 44, make the decision 30 to execute all of the conditional subset 20 of encoder operations, and determine 46, for each of the encoder operations executed, a time consumption needed to perform the respective encoder operation, and output 48 the set of features and the time consumption for all of the encoder operations executed to an apparatus 50 for decision function improvement. It should be noted that an encoder may be construed which merely operates in the "learning mode" in order to feed the apparatus 100 described hereinafter. Such a "feeding apparatus" may possibly not perform the determination 32 and the final encoding. If performing determination 32 and the final encoding, same could be used by the encoder to obtain information which is available for processing subsequent segments 12. in this manner, encoder operations seeking to code a current segment depending on previously coded or processed segments, such as spatially neighboring ones, have the necessary prediction source at hand. Likewise, some features could depend on neighboring coding modes information. The feeding apparatus could, along with the subsequently described apparatus, form a system of designing the decision functions (by determining optimal parameters thereof). Likewise, a system of the encoder described above, along with the subsequently described apparatus could be used to form a "self-learning/improving encoder system". The encoder 10 may support a resetting of the parameters of the decision functions. The parameters may be stored in a memory 52 and revised from outside via a parameter setting interface 54.

Compared to the HEVC HM encoder which uses an order among CU encoder operations of:

```
INTER_2Nx2N
MERGE        -> eds-flag
if (not eds-flag)
    {
        INTER_NxN
        INTER_Nx2N
        INTER_2NxN
        INTER_2NxnU
        INTER_2NxnD
        INTER_nLx2N
        INTER_nRx2N
    }
    INTRA
```

SPLIT

the presently described encoder allows to be configured such that the described encoder results in a more efficient encoding with nevertheless moderate encoding overhead to efficiently use an available computation or execution power. In particular, in accordance with the present encoder, there are no such hard decisions to leave off certain encoder operations as done in the HM encoder. For example, the Eds condition is such a conditional check.

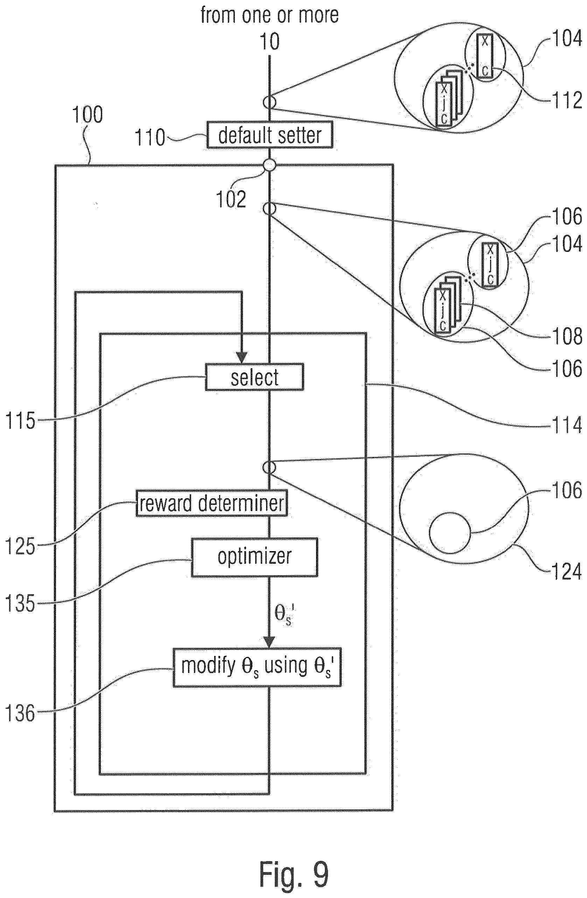

Further, there has been described above a specific implementation for an apparatus 100 for configuring one or more encoders using reinforcement learning a more general embodiment for which is shown in Fig. 9. The one or more encoders might be the encoder of Fig. 8 shown to encode picture 10. The apparatus 100 may configure the encoder from the scratch, i.e. initially, or may re-configure same by changing or improving the parameters of the decision function 22 or, taking into account the variation thereof with the varying set of previous executed encoder operations, decision functions 22. The plural is used hereinafter.

Apparatus 100 comprises an input interface 102 for receiving a set 104 of training examples 106, summarized in $\mathcal{M}$, in the above description. Each training example 106 relating to a task of encoding a respective segment 12 of a respective media signal 10. It should be noted that the segments 12 could stem from one or different ones of media content. Each training example 106 comprises for each of the set 16 of encoder operations 18 supported by the one or more encoders,

a set of features obtained by executing the respective encoder operation with respect to the respective segment, i.e. denoted 26 with respect to the encoder description, and $\mathbf{x}_{i,t}$ in the description above, which set may comprise any number of features,

a time consumed by executing the respective encoder operation with respect to the respective segment, i.e. the time duration taken by 46 and called $c_{i,t}$ above, and

a coding efficiency value indicative of a coding efficiency of using the respective encoder operation to encode the respective segment into a coded representation in terms of predetermined optimization criterion, called $j_{i,t}$ in the above outline.

The latter set, collection (or triplet) 108, denoted $(x_{i,t}, j_{i,t}, c_{i,t})$ above, has been, for example, already been computed and completely provided by the one or more encoders 10 for a corresponding encoder operation. Alternatively, a default inserter 110 has previously added default values as coding efficiency values to collections such as 112, which do not belong to the coding mode encoder operations, i.e. do not result in a coded representation. In other words, each training example 106, comprises, at the time of entering interface 102, for each encoder operation 16 of set 18, triplet $(x_{i,t}, j_{i,t}, c_{i,t})$. Here, $i$ is an index for the training example, and $t$ is index for the encoder operation.

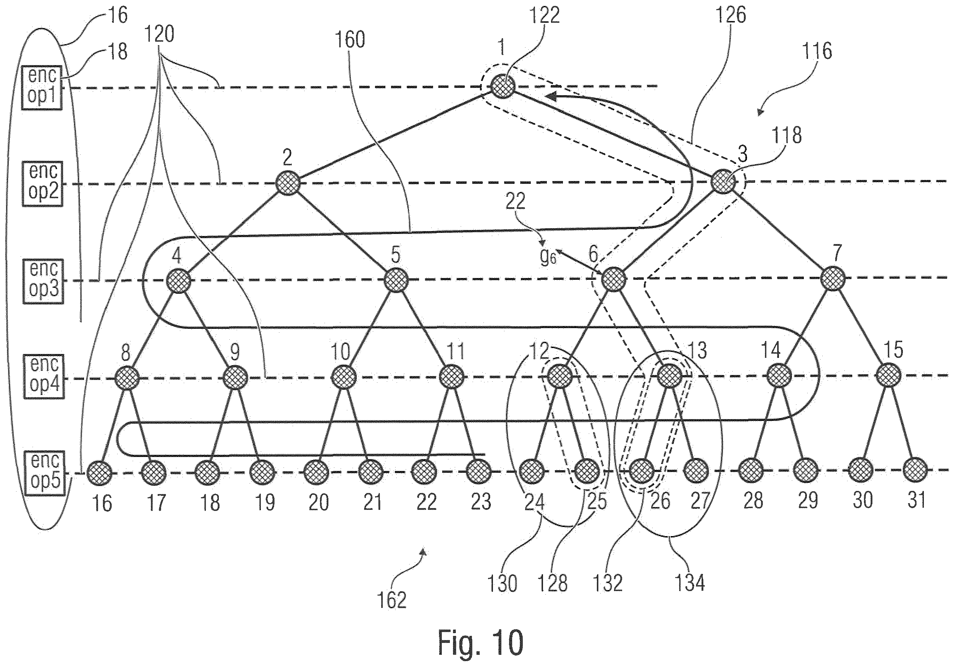

The apparatus 100 comprises a processor 114 configured to operate on a binary decision tree 116 an example had been discussed above with respect to Fig. 3. The decision tree is depicted in Fig. 10 again for sake of easier explanation of Fig. 9. The tree 116 corresponds to a sequence of decisions, namely the ones controlling 30, with respect to the set 16 of encoder operations 18 whether the respective encoder operation is to be executed or not so that nodes 118 of the binary decision tree 116 belonging to one tree level 120 pertain a decision 30 with respect to an associated one of the set 16 of encoder operations 18. Each node, s, 118 of the binary decision tree 116 has associated therewith a decision function $g_s(\mathbf{x})$ the value of which, $g_s(\mathbf{x})$, indicates whether the encoder operation associated with the tree level to which the respective node belongs is to be executed, and the attributes $\mathbf{x}$ of which comprise the sets of features obtained by encoder operations 18 for which the decision made according to the decision functions of intermediary nodes connecting the respective node with a root node 122 of the binary decision tree 116, indicates that the respective encoder operation is to be executed. Let's exemplify this with respect to node 118 s=6 of tree 116. The attributes $\mathbf{x}$ of $g_6(\mathbf{x})$ comprise the sets 26 of features 28 obtained by those encoder operations 18 associated with a subset of the tree levels between the tree level of node 6, exclusively, and the tree level of root node 122, inclusively, i.e. by encoder operations 1 to 2 in the example. The "subset" is determined in the following manner: node 6 has intermediate node 3 connecting same with the root node 122, i.e. node 1. The subset is composed of those encoder operations of the encoder operations associated with tree levels 1 and 2 of node 1 and 3 for which the decision made according to theirs decision functions $g_1(\mathbf{x})$ and $g_3(\mathbf{x})$ indicates that the respective encoder operation is to be executed. It should be recalled that this subset depends on the one hand on the current settings of the parameters of the decision functions 22 which apparatus 100 is to configure, and on the features sets 24 which are different for the individual training examples 106.

The processor 100 is configured to operate on the binary decision tree 116 in the following manner. The processor 114 determines 115 a subset 124 of training examples out of set 104 for which, when applying current parameters of the decision functions 22 of the nodes 118 of the binary decision tree 116, the binary decision tree 116 is traversed along a path 126 of nodes so that the nodes of the path 126 comprise a predetermined node of the binary decision tree 126. This subset has been denoted L{s} above. To clarify, it should again be emphasized that, as soon as feature sets 24 for all encoder operations 18 of set 16 and the parameters of functions 22 are set - as a preliminary state or final state -, path 126 may be determined for each training example 116. As each training example 116 has its own feature sets 24, the paths 126 differ. In Fig. 10, for instance, a right hand branch of any node 118 leads to a first successor node and corresponds to executing the encoder operation of the tree level which that node 118 belongs to, and a left hand branch of that node 118 leads to another successor node and corresponds to not executing the encoder operation of the tree level which that node 118 belongs to. For example, the right hand branch of node s=6 leads to successor node s= 13 and corresponds to executing the encoder operation of the tree level which node s=6 belongs to, and a left hand branch of node s=6 leads to another successor node s= 12 and corresponds to not executing the encoder operation of the tree level which node s=6 belongs to. Not for all training examples 106 within set 104, the path 126 includes or traverses node s=6. The ones for which this is the case form set 124. For sake of an easier understanding, let's preliminarily assume that node s=6 is the predetermined node. In the above description, the just-mentioned process is denoted by $\forall s$: $L_s \leftarrow \{i | s \in h^{\pi,i}\}$, with $h^{\pi,i}$ denoting path 126 for training example i and current parameters $\pi$. It should be noted that L{s} indices, thus, a subset of $\mathcal{M}$, which subset L{s} is subject to change during learning due to coding parameter updates.

Then, processor 114 determines 125 for each of the subset 124 of training examples 106 a first reward value for a subpath 128 traversed by applying the current decision function of the nodes 118 of the binary decision tree 116 within a first sub tree 130 of the binary decision tree 116 having the successor S=12 of the predetermined node s=6 as tree root node, which is reached by deciding not to execute the encoder operation associated with the tree level to which the predetermined node s=6 belongs, and a second reward value for a subpath 132 traversed when applying the current decision function of the nodes of the binary decision tree within a sub tree 134 of the binary decision tree having the successor s=13 of the predetermined node s= 6 as a tree root node which is reached when deciding to execute the encoder operation associated with the tree level to which the predetermined node s=6 belongs. The first and second reward values are computed based on the times consumed and coding efficiency values for encoder operations in tree levels for which nodes on path 126 from root node 122 up to the predetermined node, and the nodes within the respective subpath 128 and 132, respectively, indicate an execution - such as the sum of the time consumed by any traversed and executed encoder operation and the extremum of efficiency values of executed encoder operation with resulting coded representation, such as the minimum of RD-costs. In the above examples, this is computed according to

$$\mathbf{r}_0 \leftarrow (\hat{Q}^{\pi^{t_s}}(i, s, a_0))_{i \in L_s} \text{ and } \mathbf{r}_1 \leftarrow (\hat{Q}^{\pi^{t_s}}(i, s, a_1))_{i \in L_s}.$$

Then, processor 114 determines 135 optimized parameters for a decision function for the predetermined node s=6 which optimizes a reward for the subset 124 of training examples on the basis of the first and second reward values determined for the subset of training examples. $\theta'_s \leftarrow CLR(\mathbf{X}, \mathbf{r}_0, \mathbf{r}_1)$ has done this. The apparatus then modifies 136 the current parameters for the decision function of the predetermined node on the basis of the optimized parameters such as according to $\theta_s \leftarrow \alpha\theta_s' + (1 - \alpha)\theta_s$.

As explained above by equations (2) and (3), the first and second reward values may be computed based on a combination of a sum of the times consumed on the one hand and a minimum of the coding efficiency values on the other hand. The tasks of 115, 125, 135, 136 may be repeated based on the modified parameters for the predetermined node. This has been realized by **"for** $\alpha$ **in** $\langle 1,1,1, .4, .4, .4, .4 \rangle$ **do"** in Algorithm 3. The parameters of the decision functions of the nodes 118 may be initialized by apparatus 100 at the beginning to values leading to inevitably deciding to execute the encoder operation associated with the tree level which the respective node belongs to. This had been done before by $\forall s$: $\theta_s \leftarrow$ **0.** The apparatus may cyclically repeat tasks 115, 125, 135, 136 with sequentially appointing nodes of the binary decision tree the predetermined node. This may be done along an order 160 which traverses the binary decision tree 116 from a leave end 162 to the tree root 122 of the binary decision tree 116. The apparatus may handle a further set of encoder operations and a further binary decision tree with further decision functions pertaining subsegments 40 with one predetermined encoder operation of the set of encoder operations, such as SPLIT, involving subdividing a segment 12 into subsegments 40 wherein the apparatus is configured to perform the three determinations and the modification with respect to the further binary decision tree prior to the binary decision tree 116 as exemplified in Algorithm 3 at **"for** CUSize $\leftarrow$ (8,16,32,64) **do".**

Certain statements on the above examples are set out below in order to indicate that the above embodiments may be varied and should not be understood as an exhaustive list of embodiments. A non-exhaustive set of such possible modifications, are described below.

For example, the decisions made may not be binary, but n-ary. The available options consist of the set of all operations not yet executed plus a set of available coded descriptions.

When a decision is made to execute an operation, it generates features and maybe also a coded description, and is then no longer available. When a decision is made for one of the available coded descriptions, the search is terminated (for the current block/scope/episode) and the chosen description is the accepted one.

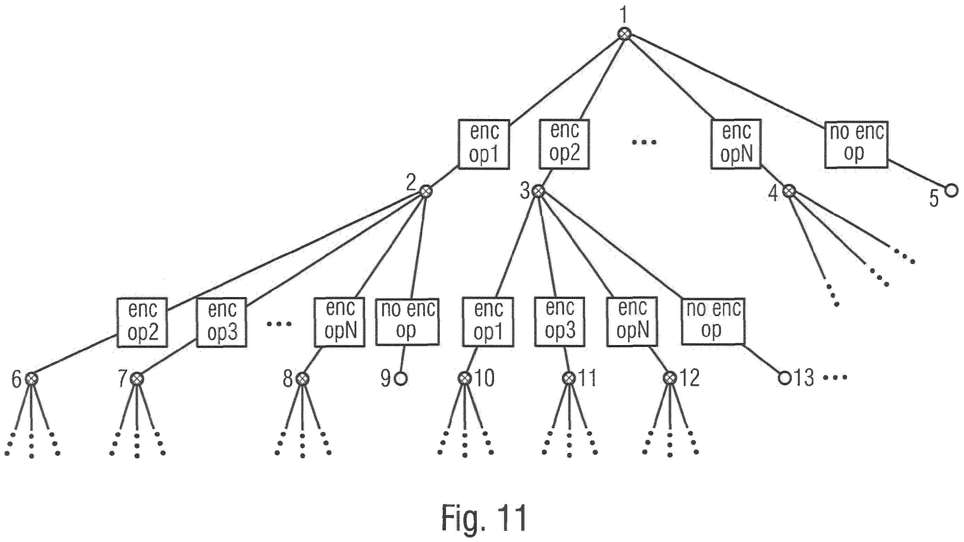

Fig. 11 depicts an example for a broader interpretation of a decision tree. Each node nodes is still a decision, but it has more than two alternatives. For instance, the first decision or tree root node may offer the opportunity to select any of the N encoder operations available, i.e. set 16 or 20, and additionally an option according to which no encoder operation is selected at all. The latter option may be missing for this tree root node #1, alternatively. The branches leading to the successor nodes #2 to #5 of the next tree level are, thus, associated with different outcomes of the first decision which node 1 relates to, the decision as to whether any first encoder operation is to be executed, and, if yes, which one. It's the same with the nodes of the next tree level: Nodes #2 to #5 decide on the second encoder operation, namely whether such second encoder operation is to be executed at all, and, if yes, which one. The set of available options or branches for each node of nodes #2 to #5 is different and depends on the already executed encoder operations till the respective mode. Same are subtracted from the set of all available encoder operations. Node #5 is associated with not executing any encoder operation, and is a leave node of tree. No further encoder operation is tested here. The tree is constructed in this manner further with respect to following tree levels and nodes. The above description may be transferred onto the example of Fig. 11. In case of Fig. 8 to 10, the tree was binary and the nodes of a certain tree level, i.e. the $n^{th}$ tree level were related to the decision related to the $n^{th}$ encoder operation, i.e. whether or not any further encoder operation is to be executed, and which one, if yes. In case of Fig. 8 to 10, there has been a one to one correspondence between the tree levels on the one hand and the encoder operations on the other hand. This correspondence is left off in the example of Fig. 11. The other aforedescribed functionalities of encoder and apparatus of Fig. 8 and 9 , however, remain even here: The encoder sequentially traverses the encoder operations of set 20 to make a decision of executing the current encoder operation or not on the basis of the decision function 22. The decision relates to the $n^{th}$ encoder operation to be decided on. In case of Fig. 8 and 9, the decision pertains the encoder operation 18 associated with that rank n. In case of Fig. 11, the decision which encoder operation is actually executed is decided in case of execution being approved. That is, in case of Fig. 11, there is no preset order among the encoder operations of set 20. The sequential traversal traverses same in an order which is not preset, but develops depending on features of encoder operations executed so far. The sequential traversal, thus, relates to the traverse of the encoder operation decisions at the nodes of the decision tree and, thus, determines the attributes of the decision function of a current decision as same are composed by the features obtained by previously traversed and executed encoder operations. As far as the apparatus of Fig. 9 is concerned, the rewards determined, are determined for each branch of the predetermined, i.e. currently processed, node of the tree, which, in turn, relates to the $n^{th}$ encoder operation to be decided on in case of the node being in the $n^{th}$ tree level. IN case of Fig. 10, two branches exist, with the $n^{th}$ encoder operation the execution of which is to be decided on, being related to one associated encoder operation. In case of Fig. 11, the $n^{th}$ encoder operation the execution of which is to be decided on, may relate to more than one encoder operation 18 as discussed with respect to Fig. 11.

The binary setting described above can be seen as a special realization of n-ary decisions by using a sequence of binary decisions (Compare the gray-shaded sequences of nodes in Fig.3. Each grey-shaded group can be seen as one n-ary decision node). However, the n-ary decision functions could be realized in various ways (e.g. Artificial neural networks).

For example, to decide between descriptions A and B, the usual decision rule is or

$$J_A < J_B$$

(1)

or

$$J_A - J_B < 0$$

(2)

or

$$\theta_0 + \theta_1 J_A + \theta_2 J_B < 0$$

(3)

$$\theta_0 + \theta_1 D_A + \theta_2 \lambda R_B + \theta_3 D_B + \theta_4 \lambda R_B < 0$$

with

$$\theta_0 = 0, \theta_1 = 1, \theta_2 = 1, \theta_3 = -1, \theta_4 = -1$$

which is a linear inequality in the features $D_A$, $D_B$, $R_A$, $R_B$.

Although not specifically described above, it should be noted that the features 28 discussed above may be in logarithm domain. That is, they may be derived by logarithmization. In the logarithm domain, they may be subject to multiplication with the decision parameters to be learnt or configured. The latter, thus, act as weights for the features in the decision process. The logarithm domain focusses the influence of the features 28 on the encoder operation decisions via the parameters of the decision functions onto the non-extremal statistics of these features and may lead to an improved encoder configuration using the configuration according to Fig. 9. In the configuration of Fig. 9, the features may internally be treated additionally in a normalized manner such as normalized towards zero mean and certain spread such as a certain standard deviation such as one.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus. Some or all of the method steps may be executed by (or using) a hardware apparatus, like for example, a microprocessor, a programmable computer or an electronic circuit. In some embodiments, one or more of the most important method steps may be executed by such an apparatus.

Depending on certain implementation requirements, embodiments of the invention can be implemented in hardware or in software. The implementation can be performed using a digital storage medium, for example a floppy disk, a DVD, a Blu-Ray, a CD, a ROM, a PROM, an EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some examples not forming part of the claimed invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may for example be stored on a machine readable carrier.

Other examples not forming part of the claimed invention comprise the computer program for performing one of the methods described herein, stored on a machine readable carrier. In other words, an embodiment of the inventive method is, therefore, a computer program having a program code for performing one of the methods described herein, when the computer program runs on a computer.

A further example not forming part of the claimed invention is, therefore, a data carrier (or a digital storage medium, or a computer-readable medium) comprising, recorded thereon, the computer program for performing one of the methods described herein. The data carrier, the digital storage medium or the recorded medium are typically tangible and/or non-transitionary.

A further example not forming part of the claimed invention is, therefore, a data stream or a sequence of signals representing the computer program for performing one of the methods described herein. The data stream or the sequence of signals may for example be configured to be transferred via a data communication connection, for example via the Internet.

A further example not forming part of the claimed invention comprises a processing means, for example a computer, or a programmable logic device, configured to or adapted to perform one of the methods described herein.

A further example not forming part of the claimed invention comprises a computer having installed thereon the computer program for performing one of the methods described herein.

A further example not forming part of the claimed invention according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some examples not forming part of the claimed invention a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The apparatus described herein may be implemented using a hardware apparatus, or using a computer, or using a combination of a hardware apparatus and a computer.

The apparatus described herein, or any components of the apparatus described herein, may be implemented at least partially in hardware and/or in software.

The methods described herein may be performed using a hardware apparatus, or using a computer, or using a combination of a hardware apparatus and a computer.

The methods described herein, or any components of the apparatus described herein, may be performed at least partially by hardware and/or by software.

The above described embodiments are merely illustrative for the principles of the present invention. It is understood that modifications and variations of the arrangements and the details described herein will be apparent to others skilled in the art. within the scope of the appended claims.

## References

[1] F. Bossen, "Common test conditions and software reference configurations," Document JCTVC-L1100, Geneva, Switzerland, 2013.

[2] K. Won H. Lee J. Yang, J. Kim and B. Jeon, "Early skip detection for hevc," Document JCTVC-G543, Geneva, Switzerland, 2011.

[3] A. Heindel, T. Haubner, and A. Kaup, "Fast cu split decisions for hevc inter coding using support vector machines," in Picture Coding Symposium, Nuremberg, Germany, December 2016.

[4] Michael J. Kearns, Yishay Mansour, and Andrew Y. Ng, "Approximate planning in large pomdps via reusable trajectories," in Advances in Neural Information Processing Systems 12, [NIPS Conference, Denver, Colorado, USA, November 29 - December 4, 1999], 1999, pp. 1001-1007.

[5] J. Langford andJ. Langford B. Zadrozny, "Reducing t-step reinforcement learning to classification," .

[6] J. Vanne, M. Viitanen, and T. D. Hämäläinen, "Efficient mode decision schemes for hevc inter prediction," IEEE Transactions on Circuits and Systems for Video Technology, vol. 24, no. 9, pp. 1579-1593, Sept 2014.

[7] B. Zadrozny N. Abe and J. Langford, "Cost-sensitive learning by cost-proportionate example weighting," 2003.

## Claims

1. Apparatus for configuring an encoder using reinforcement learning, comprising:

an input interface (102) for receiving training examples (106), each training example (106) relating to a task of encoding a respective segment (12) of a respective media signal (10) by one or more encoders, wherein each training example (106) comprises for each of a set of encoder operations supported by the one or more encoders,

a set of features ($x$) obtained by executing the respective encoder operation with respect to the respective segment, and
a time ($c$) consumed by executing the respective encoder operation with respect to the respective segment, and
a coding efficiency value ($j$) indicative of a coding efficiency of using the respective encoder operation to encode the respective segment into a coded representation in terms of predetermined optimization criterion;

a processor (114) configured to operate on a decision tree (116) which corresponds to a sequence of decisions with respect to the set of encoder operations so that nodes of the decision tree belonging to one tree level pertain a decision with respect to one of the set of encoder operations, each node of the decision tree having associated therewith a decision function (22) the value of which indicates whether the encoder operation associated with the tree level to which the respective node belongs is to be executed, and the attributes of which comprise the sets of features obtained by encoder operations for which the decision made according to the decision functions of intermediary nodes connecting the respective node with a root node of the decision tree, and the root node, indicates that the respective encoder operation is to be executed, wherein the processor (114) is configured to operate on the decision tree by

determining (115) a subset (124) of the training examples for which, when applying current parameters of the decision functions of the nodes of the decision tree, the decision tree is traversed along a path of nodes so that the nodes of the path comprise a predetermined node;

determining (125), for each of the subset (124) of training examples,

a first reward value for a first subpath (128) traversed by applying the current decision function of the nodes of the decision tree within a first subtree of the decision tree having a first successor of the predetermined node, as a tree root node, and

a second reward value for a second subpath traversed when applying the current decision function of the nodes of the decision tree within a second subtree of the decision tree having a second successor of the predetermined node as a tree root node,

wherein the first and second reward values are computed based on the times consumed and coding efficiency values of encoder operations indicated to be executed by nodes of the path from the root node up to the predetermined node, and nodes within the first and second subpaths, respectively,

determining (135) optimized parameters for the decision function (22) of the predetermined node which optimize a reward for the subset of training examples on the basis of the first and second reward values determined for the subset of training examples, and

modifying (136) the current parameters of the decision function of the predetermined node on the basis of the optimized parameters.

2.  Apparatus according to claim 1, wherein the first reward value is computed based on the times consumed and coding efficiency values of encoder operations for which nodes of the path from the root node up to the predetermined node, and nodes within the first subpaths indicate that the respective encoder operation is to be executed, and the second reward value is computed based on the times consumed and coding efficiency values of encoder operations for which nodes of the path from the root node up to the predetermined node, and nodes within the second subpath indicate that the respective encoder operation is to be executed.

3.  Apparatus according to claim 1 or 2, wherein the first and second reward values are computed based on a combination of a sum of the times consumed on the one hand and a minimum of the coding efficiency values on the other hand.

4.  Apparatus according to any of claims 1 to 3, wherein the apparatus is configured to repeat the three determinations and the modification based on the modified parameters for the predetermined node.

5.  Apparatus according to any of claims 1 to 4, wherein the decision tree (116) is a binary decision tree and corresponds to a sequence of decisions with respect to the set of encoder operations whether the respective encoder operation is to be executed or not, and the first successor of the predetermined node is reached by deciding not to execute the encoder operation associated with the tree level to which the predetermined node belongs, and second successor of the predetermined node is reached by deciding to execute the encoder operation associated with the tree level to which the predetermined node belongs.

6.  Apparatus according to claim 5, wherein the apparatus is configured to initialize the parameters of the decision functions of the nodes to values leading to inevitably deciding to execute the encoder operation associated with the tree level which the respective node belongs to.

7.  Apparatus according to any of claims 1 to 6, wherein the apparatus is configured to cyclically repeat the three determinations and the modification with sequentially appointing nodes of the decision tree the predetermined node along an order which traverses the decision tree from a leave end to the tree root of the decision tree.

8.  Apparatus according to any of claims 1 to 7, wherein the apparatus is configured to handle a further set of encoder operations and a further decision tree with further decision functions pertaining subsegments with one predetermined encoder operation of the set of encoder operations involving subdividing a segment into subsegments wherein the apparatus is configured to perform the three determinations and the modification with respect to the further decision tree prior to the decision tree.

9.  Apparatus according to any of claims 1 to 8 wherein the apparatus is configured to normalize the set of features so as to have a zero mean and predetermined standard deviation.

**10.** Encoder configured to encode a media signal (10) in units of segments (12), wherein the encoder is configured to encode each segment by executing at least one of a set (16) of encoder operations (18) by

sequentially traversing at least a conditional subset (20) of the set (16) of encoder operations (18), with, for each encoder operation of the conditional subset (20),
making a decision (30) on executing the respective encoder operation on the basis of a decision function (22) and, if the decision function (22) indicates that the respective encoder operation is to be executed, execute (24) the respective encoder operation so as to obtain a set (26) of features (28), wherein the arguments (29) of the decision function (22) on the basis of which the decision on executing the respective encoder operation is made comprise the sets of features obtained by the execution of preceding encoder operations;
determining which of an executed subset (37) of the set (16) of encoder operations results in a coded representation (36) of the respective segment (12) which is extremal in terms of a predetermined optimization criterion; and
using the coded representation of the encoder operation determined for encoding the respective segment, wherein parameters of the decision function are determined by the apparatus according to claim 1.

**11.** Encoder according to claim 10, wherein the decision function (22) is a linear inequality.

**12.** Encoder according to claim 10 or 11, wherein the set (26) of features (28) varies depending on the encoder operation by which the set (26) of features (28) is obtained.

**13.** Encoder according to any of claims 10 to 12, wherein the set (26) of features (28) comprises one or more of

a length (42) of a coded representation (36) resulting from encoding the respective segment using the encoder operation from which the set (26) of features (28) is obtained;
an encoding error of a coded representation (36) resulting from encoding the respective segment using the encoder operation from which the set (26) of features (28) is obtained;
a measure for a translation invariance of the respective segment;
a flag indicating whether the encoder operation from which the set (26) of features (28) is obtained, results in a coded representation (36) into which a non-zero prediction residual of samples of the respective segment is coded;
a measure measuring a smallness of a coding error resulting from encoding the respective segment using the encoder operation from which the set of features is obtained by adopting prediction modes used in a neighborhood of the respective segment; and
a set of one or more values indicative of a difference in a coding error resulting from coding subsegments of the respective segment by adopting a common candidate of prediction modes used in a neighborhood of the respective segment or by adopting, for each subsegment individually, an individual candidate of prediction modes used in the neighborhood of the respective segment.

**14.** Encoder according to any of claims 10 to 13, wherein the set (26) of features (28) is obtained by logarithmization.

**15.** Encoder according to any of claims 10 to 14, wherein the set of encoder operations comprises coding modes the execution of which results, in addition to the set of features, in a coded representation (36) of the respective segment, wherein the conditional subset (20) comprises at least one of the coding modes.

**16.** Encoder according to any of claims 10 to 15, wherein the predetermined optimization criterion depends on a coding rate (R) and a coding distortion (D).

**17.** Encoder according to any of claims 10 to 16, wherein the encoder is configured to, in case of executing the respective segment using a predetermined one of the set of encoder operations, spatially divide the respective segment into subsegments (200) and perform for each subsegment (200) sequentially traversing and determining with respect to a further set (204) of encoder operations.

**18.** Encoder according to any of claims 10 to 17, wherein the encoder comprises a learning mode, wherein the encoder is configured to, if being in the learning mode,

make the decision to execute all of the conditional subset (20) of encoder operations, and
determine, for each of the encoder operations executed, a time consumption needed to perform the respective encoder operation, and
output the set (112) of features and the time consumption for all of the encoder operations executed to an apparatus for decision function improvement.

19. Encoder according to any of claims 10 to 18, wherein the encoder supports a resetting of parameters of the decision function (22).

20. Method for configuring one or more encoders using reinforcement learning, comprising:

an input interface (102) for receiving training examples (106), each training example (106) relating to a task of encoding a respective segment (12) of a respective media signal (10) by one or more encoders, wherein each training example (106) comprises for each of a set of encoder operations supported by the one or more encoders,

a set of features (x) obtained by executing the respective encoder operation with respect to the respective segment, and
a time (c) consumed by executing the respective encoder operation with respect to the respective segment, and
a coding efficiency value (j) indicative of a coding efficiency of using the respective encoder operation to encode the respective segment into a coded representation in terms of predetermined optimization criterion;

a processor (114) configured to operate on a decision tree (116) which corresponds to a sequence of decisions with respect to the set of encoder operations so that nodes of the decision tree belonging to one tree level pertain a decision with respect to one of the set of encoder operations, each node of the decision tree having associated therewith a decision function (22) the value of which indicates whether the encoder operation associated with the tree level to which the respective node belongs is to be executed, and the attributes of which comprise the sets of features obtained by encoder operations for which the decision made according to the decision functions of intermediary nodes connecting the respective node with a root node of the decision tree, and the root node, indicates that the respective encoder operation is to be executed, wherein the processor (114) is configured to operate on the decision tree by
determining (115) a subset (124) of the training examples for which, when applying current parameters of the decision functions of the nodes of the decision tree, the decision tree is traversed along a path of nodes so that the nodes of the path comprise a predetermined node;
determining (125), for each of the subset (124) of training examples,

a first reward value for a first subpath (128) traversed by applying the current decision function of the nodes of the decision tree within a first subtree of the decision tree having a first successor of the predetermined node, as a tree root node, and
a second reward value for a second subpath traversed when applying the current decision function of the nodes of the decision tree within a second subtree of the decision tree having a second successor of the predetermined node as a tree root node,
wherein the first and second reward values are computed based on the times consumed and coding efficiency values of encoder operations indicated to be executed by nodes of the path from the root node up to the predetermined node, and nodes within the first and second subpaths, respectively,

determining (135) optimized parameters for the decision function (22) of the predetermined node which optimize a reward for the subset of training examples on the basis of the first and second reward values determined for the subset of training examples, and
modifying (136) the current parameters of the decision function of the predetermined node on the basis of the optimized parameters.

21. Method for encoding a media signal (10) in units of segments (12), wherein the encoder is configured to encode each segment by executing at least one of a set (16) of encoder operations (18), the method comprising

sequentially traversing at least a conditional subset (20) of the set (16) of encoder operations (18), with, for each encoder operation of the conditional subset (20),
making a decision (30) on executing the respective encoder operation on the basis of a decision function (22) and, if the decision function (22) indicates that the respective encoder operation is to be executed, execute (24) the respective encoder operation so as to obtain a set (26) of features (28), wherein the arguments (29) of the decision function (22) on the basis of which the decision on executing the respective encoder operation is made comprise the sets of features obtained by the execution of preceding encoder operations;

determining which of an executed subset (37) of the set (16) of encoder operations results in a coded representation (36) of the respective segment (12) which is extremal in terms of a predetermined optimization criterion; and

using the coded representation of the encoder operation determined for encoding the respective segment, wherein parameters of the decision function are determined by the method according to claim 20.

22. Computer program having a program code for performing, when running on a computer, a method according to claim 20 or 21.

**Patentansprüche**

1. Eine Vorrichtung zum Konfigurieren eines Codierers unter Verwendung von verstärkendem Lernen, die folgende Merkmale aufweist:

eine Eingangsschnittstelle (102) zum Empfangen von Trainingsbeispielen (106), wobei sich jedes Trainingsbeispiel (106) auf eine Aufgabe einer Codierung eines jeweiligen Segmentes (12) eines jeweiligen Mediensignals (10) durch einen oder mehrere Codierer bezieht, wobei jedes Trainingsbeispiel (106) für jede einer Menge von Codiereroperationen, die durch den einen oder die mehreren Codierer unterstützt werden, Folgendes aufweist:

eine Menge von Merkmalen (x), die durch Ausführen der jeweiligen Codiereroperation in Bezug auf das jeweilige Element erhalten werden, und

einen Zeitraum (c), der durch das Ausführen der jeweiligen Codiereroperation in Bezug auf das jeweilige Segment verbraucht wird, und

einen Codiereffizienzwert (j), der eine Codiereffizienz einer Verwendung der jeweiligen Codiereroperation zum Codieren des jeweiligen Segmentes in eine codierte Darstellung im Hinblick auf ein vorbestimmtes Optimierungskriterium angibt;

einen Prozessor (114), der dazu konfiguriert ist, an einem Entscheidungsbaum (116) zu arbeiten, der einer Sequenz von Entscheidungen in Bezug auf die Menge von Codiereroperationen entspricht, so dass Knoten des Entscheidungsbaumes, die zu einer Baumebene gehören, eine Entscheidung in Bezug auf eine der Menge von Codiereroperationen betreffen, wobei jedem Knoten des Entscheidungsbaumes eine Entscheidungsfunktion (22) zugeordnet ist, deren Wert angibt, ob die Codiereroperation, die der Baumebene zugeordnet ist, zu der der jeweilige Knoten gehört, auszuführen ist, und deren Attribute die Mengen von Merkmalen aufweisen, die durch die Codiereroperationen erhalten werden, für die die Entscheidung, die gemäß den Entscheidungsfunktionen von Zwischenknoten, die den jeweiligen Knoten mit einem Wurzelknoten des Entscheidungsbaumes verbinden, und der Wurzelknoten, angibt dass die jeweilige Codiereroperation auszuführen ist, wobei der Prozessor (114) dazu konfiguriert ist, an dem Entscheidungsbaum zu arbeiten durch:

Bestimmen (115) einer Teilmenge (124) der Trainingsbeispiele, für die, wenn aktuelle Parameter der Entscheidungsfunktionen der Knoten des Entscheidungsbaumes angewendet werden, der Entscheidungsbaum entlang eines Pfades von Knoten durchlaufen wird, so dass die Knoten des Pfades einen vorbestimmten Knoten aufweisen;

Bestimmen (125), für jedes der Teilmenge (124) von Trainingsbeispielen, von:

einem ersten Belohnungswert für einen ersten Teilpfad (128), der durch Anwenden der aktuellen Entscheidungsfunktion der Knoten des Entscheidungsbaumes innerhalb eines ersten Teilbaumes des Entscheidungsbaumes mit einem ersten Nachfolger des vorbestimmten Knotens als Baumwurzelknoten durchlaufen wird, und

einem zweiten Belohnungswert für einen zweiten Teilpfad, der beim Anwenden der aktuellen Entscheidungsfunktion der Knoten des Entscheidungsbaumes innerhalb eines zweiten Teilbaumes des Entscheidungsbaumes mit einem zweiten Nachfolger des vorbestimmten Knotens als Baumwurzelknoten durchlaufen wird,

wobei der erste und der zweite Belohnungswert berechnet werden auf der Basis der verbrauchten Zeiträume und der Codiereffizienzwerte von Codiereroperationen, für die angegeben wird, dass sie durch Knoten des Pfades von dem Wurzelknoten bis zu dem vorbestimmten Knoten und Knoten innerhalb des ersten bzw. zweiten Teilpfades ausgeführt werden,

Bestimmen (135) von optimierten Parametern für die Entscheidungsfunktion (22) des vorbestimmten Knotens, die eine Belohnung für die Teilmenge von Trainingsbeispielen auf der Basis des ersten und des zweiten Belohnungswerts, die für die Teilmenge von Trainingsbeispielen bestimmt werden, optimieren, und Modifizieren (136) der aktuellen Parameter der Entscheidungsfunktion des vorbestimmten Knotens auf der Basis der optimierten Parameter.

2. Vorrichtung gemäß Anspruch 1, wobei der erste Belohnungswert auf der Basis der verbrauchten Zeiträume und der Codiereffizienzwerte von Codiereroperationen berechnet wird, für die Knoten des Pfades von dem Wurzelknoten bis zu dem vorbestimmten Knoten sowie Knoten innerhalb des ersten Teilpfades angeben, dass die jeweilige Codiereroperation auszuführen ist, und der zweite Belohnungswert auf der Basis der verbrauchten Zeiträume und der Codiereffizienzwerte von Codiereroperationen berechnet wird, für die Knoten des Pfades von dem Wurzelknoten bis zu dem vorbestimmten Knoten sowie Knoten innerhalb des zweiten Teilpfades angeben, dass die jeweilige Codiereroperation auszuführen ist.

3. Vorrichtung gemäß Anspruch 1 oder 2, wobei der erste und zweite Belohnungswert auf der Basis einer Kombination einer Summe der verbrauchten Zeiträume einerseits und einem Minimum der Codiereffizienzwerte andererseits berechnet werden.

4. Vorrichtung gemäß einem der Ansprüche 1 bis 3, wobei die Vorrichtung dazu konfiguriert ist, die drei Bestimmungen und die Modifizierung auf der Basis der modifizierten Parameter für den vorbestimmten Knoten zu wiederholen.

5. Vorrichtung gemäß einem der Ansprüche 1 bis 4, wobei der Entscheidungsbaum (116) ein binärer Entscheidungsbaum ist und einer Sequenz von Entscheidungen in Bezug auf die Menge von Codiereroperationen darüber entspricht, ob die jeweilige Codiereroperation auszuführen ist oder nicht, und der erste Nachfolger des vorbestimmten Knotens durch das Entscheiden erreicht wird, dass die Codiereroperation, die der Baumebene zugeordnet ist, zu der der vorbestimmte Knoten gehört, nicht auszuführen ist, und ein zweiter Nachfolger des vorbestimmten Knotens durch das Entscheiden erreicht wird, dass die Codiereroperation, die der Baumebene zugeordnet ist, zu der der vorbestimmte Knoten gehört, auszuführen ist.

6. Vorrichtung gemäß Anspruch 5, wobei die Vorrichtung dazu konfiguriert ist, die Parameter der Entscheidungsfunktionen der Knoten auf Werte zu initialisieren, die zur unausweichlichen Entscheidung führen, die Codiereroperation, die der Baumebene zugeordnet ist, zu der der jeweilige Knoten gehört, auszuführen.

7. Vorrichtung gemäß einem der Ansprüche 1 bis 6, wobei die Vorrichtung dazu konfiguriert ist, die drei Bestimmungen und die Modifizierung mit dem sequenziellen Ernennen von Knoten des Entscheidungsbaumes als den vorbestimmten Knoten entlang einer Reihenfolge, die der Entscheidungsbaum von einem Blattende zu der Baumwurzel des Entscheidungsbaumes durchläuft, zyklisch zu wiederholen.

8. Vorrichtung gemäß einem der Ansprüche 1 bis 7, wobei die Vorrichtung dazu konfiguriert ist, eine weitere Menge von Codiereroperationen und einen weiteren Entscheidungsbaum mit weiteren Entscheidungsfunktionen, die Teilsegmente betreffen, mit einer vorbestimmten Codiereroperation der Menge von Codiereroperationen zu behandeln, was ein Unterteilen eines Segmentes in Teilsegmente beinhaltet, wobei die Vorrichtung dazu konfiguriert ist, die drei Bestimmungen und die Modifizierung in Bezug auf den weiteren Entscheidungsbaum vor dem Entscheidungsbaum auszuführen.

9. Vorrichtung gemäß einem der Ansprüche 1 bis 8, wobei die Vorrichtung dazu konfiguriert ist, die Menge von Merkmalen zu normalisieren, um mittelwertfrei zu sein und eine vorbestimmte Standardabweichung aufzuweisen.

10. Codierer, der dazu konfiguriert ist, ein Mediensignal (10) in Einheiten von Segmenten (12) zu codieren, wobei der Codierer dazu konfiguriert ist, jedes Segment durch Ausführen zumindest einer Menge (16) von Codiereroperationen (18) zu codieren, durch:

sequenzielles Durchlaufen zumindest einer bedingten Teilmenge (20) der Menge (16) von Codiereroperationen (18), mit, für jede Codiereroperation der bedingten Teilmenge (20), Treffen einer Entscheidung (30) über das Ausführen der jeweiligen Codiereroperation auf der Basis einer Entscheidungsfunktion (22), und, falls die Entscheidungsfunktion (22) angibt, dass die jeweilige Codiereroperation auszuführen ist, Ausführen (24) der jeweiligen Codiereroperation, um eine Menge (26) von Merkmalen (28) zu erhalten, wobei die Argumente (29) die Entscheidungsfunktion (22), auf deren Basis die Entscheidung zum Ausführen der jeweiligen Codiereroperation getroffen wird, die Mengen von Merkmalen aufweist, die durch das Ausführen vorhergehender Codiereroperationen erhalten werden;

Bestimmen, welche einer ausgeführten Teilmenge (37) der Menge (16) von Codiereroperationen eine codierte Darstellung (36) des jeweiligen Segmentes (12), extremal in Bezug auf ein vorbestimmtes Optimierungskriterium, zur Folge hat; und

Verwenden der codierten Darstellung der Codiereroperation, die zum Codieren des jeweiligen Segmentes bestimmt wird,

wobei Parameter der Entscheidungsfunktion durch die Vorrichtung gemäß Anspruch 1 bestimmt werden.

11. Codierer gemäß Anspruch 10, wobei die Entscheidungsfunktion (22) eine lineare Ungleichheit ist.

12. Codierer gemäß Anspruch 10 oder 11, wobei die Menge (26) von Merkmalen (28) in Abhängigkeit von der Codiereroperation variiert, durch die die Menge (26) von Merkmalen (28) erhalten wird.

13. Codierer gemäß einem der Ansprüche 10 bis 12, wobei die Menge (26) von Merkmalen (28) Folgendes aufweist:

eine Länge (42) einer codierten Darstellung (36), die aus dem Codieren des jeweiligen Segmentes unter Verwendung der Codiereroperation resultiert, aus der die Menge (26) von Merkmalen (28) erhalten wird;

einen Codierfehler einer codierten Darstellung (36), die aus dem Codieren des jeweiligen Segmentes unter Verwendung der Codiereroperation resultiert, aus der die Menge (26) von Merkmalen (28) erhalten wird;

ein Maß für eine Übersetzungsinvarianz des jeweiligen Segmentes;

eine Kennzeichnung, die angibt, ob die Codiereroperation, aus der die Menge (26) von Merkmalen (28) erhalten wird, eine codierte Darstellung (36) zur Folge hat, in die ein Nicht-Null-Vorhersagerest von Abtastwerten des jeweiligen Segmentes codiert ist;

ein Maß, das eine Kleinheit eines Codierfehlers misst, der aus dem Codieren des jeweiligen Segmentes unter Verwendung der Codiereroperation resultiert, aus der die Menge von Merkmalen erhalten wird, durch Einsetzen von Prädiktionsmodi, die in einer Nachbarschaft des jeweiligen Segmentes verwendet werden; und

eine Menge von einem oder mehreren Werten, die eine Differenz hinsichtlich eines Codierfehlers angeben, der resultiert aus dem Codieren von Teilsegmenten des jeweiligen Segmentes durch Einsetzen eines gemeinsamen Kandidaten von Prädiktionsmodi, die in einer Nachbarschaft des jeweiligen Segmentes verwendet werden, oder durch Einsetzen, individuell für jedes Teilsegment, eines individuellen Kandidaten von Prädiktionsmodi, die in der Nachbarschaft des jeweiligen Segmentes verwendet werden.

14. Codierer gemäß einem der Ansprüche 10 bis 13, wobei die Menge (26) von Merkmalen (28) durch Logarithmierung erhalten wird.

15. Codierer gemäß einem der Ansprüche 10 bis 14, wobei die Menge von Codiereroperationen Codiermodi aufweist, deren Ausführung, zusätzlich zu der Menge von Merkmalen, eine codierte Darstellung (36) des jeweiligen Segmentes zur Folge hat, wobei die bedingte Teilmenge (20) zumindest einen der Codiermodi aufweist.

16. Codierer gemäß einem der Ansprüche 10 bis 15, wobei das vorbestimmte Optimisierungskriterium von einer Codierrate (R) und einer Codierverzerrung (D) abhängt.

17. Codierer gemäß einem der Ansprüche 10 bis 16, wobei der Codierer dazu konfiguriert ist, im Fall einer Ausführung des jeweiligen Segmentes unter Verwendung einer vorbestimmten Menge von Codiereroperationen, das jeweilige Segment räumlich in Teilsegmente (200) zu unterteilen, und für jedes Teilsegment (200) ein sequenzielles Durchlaufen und Bestimmen in Bezug auf eine weitere Menge (204) von Codiereroperationen auszuführen.

18. Codierer gemäß einem der Ansprüche 10 bis 17, wobei der Codierer einen Lernmodus aufweist, wobei der Codierer dazu konfiguriert ist, falls derselbe in dem Lernmodus ist,

die Entscheidung zum Ausführen der gesamten bedingten Teilmenge (20) von Codiereroperationen zu treffen, und

für jede der ausgeführten Codiereroperationen einen Zeitverbrauch zu bestimmen, der notwendig ist, um die jeweilige Codiereroperation auszuführen, und

die Menge (112) von Merkmalen und den Zeitverbrauch für alle ausgeführten Codiereroperationen an eine Vorrichtung zum Entscheiden einer Funktionsverbesserung auszugeben.

19. Codierer gemäß einem der Ansprüche 10 bis 18, wobei der Codierer ein Zurücksetzen von Parametern der Entscheidungsfunktion (22) unterstützt.

20. Verfahren zum Konfigurieren eines oder mehrerer Codierer unter Verwendung von verstärkendem Lernen, das Folgendes aufweist:

eine Eingangsschnittstelle (102) zum Empfangen von Trainingsbeispielen (106), wobei sich jedes Trainingsbeispiel (106) auf eine Aufgabe einer Codierung eines jeweiligen Segmentes (12) eines jeweiligen Mediensignals (10) durch einen oder mehrere Codierer bezieht, wobei jedes Trainingsbeispiel (106) für jede einer Menge von Codiereroperationen, die durch den einen oder die mehreren Codierer unterstützt werden, Folgendes aufweist:

eine Menge von Merkmalen (x), die durch Ausführen der jeweiligen Codiereroperation in Bezug auf das jeweilige Element erhalten werden, und
einen Zeitraum (c), der durch das Ausführen der jeweiligen Codiereroperation in Bezug auf das jeweilige Segment verbraucht wird, und
einen Codiereffizienzwert (j), der eine Codiereffizienz einer Verwendung der jeweiligen Codiereroperation zum Codieren des jeweiligen Segmentes in eine codierte Darstellung im Hinblick auf ein vorbestimmtes Optimierungskriterium angibt;

einen Prozessor (114), der dazu konfiguriert ist, an einem Entscheidungsbaum (116) zu arbeiten, der einer Sequenz von Entscheidungen in Bezug auf die Menge von Codiereroperationen entspricht, so dass Knoten des Entscheidungsbaumes, die zu einer Baumebene gehören, eine Entscheidung in Bezug auf eine der Menge von Codiereroperationen betreffen, wobei jedem Knoten des Entscheidungsbaumes eine Entscheidungsfunktion (22) zugeordnet ist, deren Wert angibt, ob die Codiereroperation, die der Baumebene zugeordnet ist, zu der der jeweilige Knoten gehört, auszuführen ist, und deren Attribute die Mengen von Merkmalen aufweisen, die durch die Codiereroperationen erhalten werden, für die die Entscheidung, die gemäß den Entscheidungsfunktionen von Zwischenknoten, die den jeweiligen Knoten mit einem Wurzelknoten des Entscheidungsbaumes verbinden, und der Wurzelknoten, angibt dass die jeweilige Codiereroperation auszuführen ist, wobei der Prozessor (114) dazu konfiguriert ist, an dem Entscheidungsbaum zu arbeiten durch:

Bestimmen (115) einer Teilmenge (124) der Trainingsbeispiele, für die, wenn aktuelle Parameter der Entscheidungsfunktionen der Knoten des Entscheidungsbaumes angewendet werden, der Entscheidungsbaum entlang eines Pfades von Knoten durchlaufen wird, so dass die Knoten des Pfades einen vorbestimmten Knoten aufweisen;
Bestimmen (125), für jedes der Teilmenge (124) von Trainingsbeispielen, von:

einem ersten Belohnungswert für einen ersten Teilpfad (128), der durch Anwenden der aktuellen Entscheidungsfunktion der Knoten des Entscheidungsbaumes innerhalb eines ersten Teilbaumes des Entscheidungsbaumes mit einem ersten Nachfolger des vorbestimmten Knotens als Baumwurzelknoten durchlaufen wird, und
einem zweiten Belohnungswert für einen zweiten Teilpfad, der beim Anwenden der aktuellen Entscheidungsfunktion der Knoten des Entscheidungsbaumes innerhalb eines zweiten Teilbaumes des Entscheidungsbaumes mit einem zweiten Nachfolger des vorbestimmten Knotens als Baumwurzelknoten durchlaufen wird,
wobei der erste und der zweite Belohnungswert berechnet werden auf der Basis der verbrauchten Zeiträume und der Codiereffizienzwerte von Codiereroperationen, für die angegeben wird, dass sie durch Knoten des Pfades von dem Wurzelknoten bis zu dem vorbestimmten Knoten und Knoten innerhalb des ersten bzw. zweiten Teilpfades ausgeführt werden,

Bestimmen (135) von optimierten Parametern für die Entscheidungsfunktion (22) des vorbestimmten Knotens, die eine Belohnung für die Teilmenge von Trainingsbeispielen auf der Basis des ersten und des zweiten Belohnungswerts, die für die Teilmenge von Trainingsbeispielen bestimmt werden, optimieren, und
Modifizieren (136) der aktuellen Parameter der Entscheidungsfunktion des vorbestimmten Knotens auf der Basis der optimierten Parameter.

21. Verfahren zum Codieren eines Mediensignals (10) in Einheiten von Segmenten (12), wobei der Codierer dazu konfiguriert ist, jedes Segment durch Ausführen zumindest einer Menge (16) von Codieroperationen (18) zu codieren, wobei das Verfahren Folgendes aufweist:

sequenzielles Durchlaufen zumindest einer bedingten Teilmenge (20) der Menge (16) von Codieroperationen (18), mit, für jede Codieroperation der bedingten Teilmenge (20),
Treffen einer Entscheidung (30) über das Ausführen der jeweiligen Codieroperation auf der Basis einer Entscheidungsfunktion (22), und, falls die Entscheidungsfunktion (22) angibt, dass die jeweilige Codieroperation auszuführen ist, Ausführen (24) der jeweiligen Codieroperation, um eine Menge (26) von Merkmalen (28) zu erhalten, wobei die Argumente (29) die Entscheidungsfunktion (22), auf deren Basis die Entscheidung zum Ausführen der jeweiligen Codieroperation getroffen wird, die Mengen von Merkmalen aufweist, die durch das Ausführen vorhergehender Codieroperationen erhalten werden;
Bestimmen, welche einer ausgeführten Teilmenge (37) der Menge (16) von Codieroperationen eine codierte Darstellung (36) des jeweiligen Segmentes (12), extremal in Bezug auf ein vorbestimmtes Optimierungskriterium, zur Folge hat; und
Verwenden der codierten Darstellung der Codieroperation, die zum Codieren des jeweiligen Segmentes bestimmt wird,
wobei Parameter der Entscheidungsfunktion durch das Verfahren gemäß Anspruch 20 bestimmt werden.

22. Computerprogramm mit einem Programmcode zum Ausführen, wenn derselbe auf einem Computer abläuft, eines Verfahrens gemäß einem der Ansprüche 20 oder 21.

**Revendications**

1. Dispositif de configuration d'un codeur à l'aide d'un apprentissage de renforcement, comprenant:

une interface d'entrée (102) destinée à recevoir des exemples d'apprentissage (106), chaque exemple d'apprentissage (106) se rapportant à une tâche de codage d'un segment respectif (12) d'un signal multimédia respectif (10) par un ou plusieurs codeurs, où chaque exemple d'apprentissage (106) comprend, pour chacune d'un ensemble d'opérations de codeur supportées par les un ou plusieurs codeurs,

un ensemble de caractéristiques (x) obtenu en exécutant l'opération de codeur respective en ce qui concerne le segment respectif, et
un temps (c) consommé par l'exécution de l'opération de codeur respective en ce qui concerne le segment respectif, et
une valeur d'efficacité de codage (j) indicative d'une efficacité de codage de l'utilisation de l'opération de codeur respective pour coder le segment respectif en une représentation codée en termes de critère d'optimisation prédéterminé;

un processeur (114) configuré pour fonctionner sur un arbre de décision (116) qui correspond à une séquence de décisions en ce qui concerne l'ensemble des opérations de codeur de sorte que les noeuds de l'arbre de décision appartenant à un niveau d'arbre appartiennent à une décision en ce qui concerne l'une de l'ensemble des opérations de codeur, chaque noeud de l'arbre de décision présentant, y associée, une fonction de décision (22) dont la valeur indique si doit être exécutée l'opération de codeur associée au niveau d'arbre auquel appartient le nœud respectif, et dont les attributs comprennent les ensembles de caractéristiques obtenus par les opérations de codeur pour lesquelles la décision prise selon les fonctions de décision des noeuds intermédiaires connectant le nœud respectif à un noeud de racine de l'arbre de décision, et le noeud de racine, indique que l'opération de codeur respective doit être exécutée, où le processeur (114) est configuré pour fonctionner sur l'arbre de décision
en déterminant (115) un sous-ensemble (124) des exemples d'apprentissage pour lesquels, lors de l'application des paramètres actuels des fonctions de décision des noeuds de l'arbre de décision, l'arbre de décision est parcouru le long d'un trajet de noeuds de sorte que les noeuds du trajet comprennent un noeud prédéterminé;
en déterminant (125), pour chacun du sous-ensemble (124) d'exemples d'apprentissage,

une première valeur de récompense pour un premier sous-trajet (128) parcouru en appliquant la fonction de décision actuelle des noeuds de l'arbre de décision dans un premier sous-arbre de l'arbre de décision présentant un premier successeur du noeud prédéterminé, comme noeud de racine d'arbre, et
une deuxième valeur de récompense pour un deuxième sous-trajet parcouru lors de l'application de la fonction de décision actuelle des noeuds de l'arbre de décision dans un deuxième sous-arbre de l'arbre de décision présentant un deuxième successeur du noeud prédéterminé comme noeud de racine d'arbre, dans lequel les première et deuxième valeurs de récompense sont calculées sur base des temps consommés et des valeurs d'efficacité de codage des opérations de codeur indiquées comme étant à exécuter respectivement par les noeuds du trajet du noeud de racine jusqu'au nœud prédéterminé, et les noeuds dans les premier et deuxième sous-trajets,

en déterminant (135) les paramètres optimisés pour la fonction de décision (22) du noeud prédéterminé qui optimisent une récompense pour le sous-ensemble d'exemples d'apprentissage sur base des première et deuxième valeurs de récompense déterminées pour le sous-ensemble d'exemples d'apprentissage, et

en modifiant (136) les paramètres actuels de la fonction de décision du noeud prédéterminé sur base des paramètres optimisés.

2.   Appareil selon la revendication 1, dans lequel la première valeur de récompense est calculée sur base des temps consommés et des valeurs d'efficacité de codage des opérations de codeur pour lesquelles les noeuds du trajet du noeud de racine jusqu'au noeud prédéterminé, et les noeuds dans les premiers sous-trajets indiquent que doit être exécutée l'opération de codeur respective, et la deuxième valeur de récompense est calculée sur base des temps consommés et des valeurs d'efficacité de codage des opérations de codeur pour lesquelles les noeuds du trajet du noeud de racine jusqu'au noeud prédéterminé et les noeuds dans le deuxième sous-trajet indiquent que doit être exécutée l'opération de codeur respective.

3.   Appareil selon la revendication 1 ou 2, dans lequel les première et deuxième valeurs de récompense sont calculées sur base d'une combinaison d'une somme des temps consommés, d'une part, et d'un minimum des valeurs d'efficacité de codage, d'autre part.

4.   Appareil selon l'une quelconque des revendications 1 à 3, dans lequel l'appareil est configuré pour répéter les trois déterminations et la modification sur base des paramètres modifiés pour le noeud prédéterminé.

5.   Appareil selon l'une quelconque des revendications 1 à 4, dans lequel l'arbre de décision (116) est un arbre de décision binaire et correspond à une séquence de décisions en ce qui concerne l'ensemble des opérations de codeur, de si l'opération de codeur respective doit être exécutée ou non, et le premier successeur du noeud prédéterminé est atteint en décidant de ne pas exécuter l'opération de codeur associée au niveau d'arbre auquel appartient le noeud prédéterminé, et le deuxième successeur du noeud prédéterminé est atteint en décidant d'exécuter l'opération de codeur associée au niveau de l'arbre auquel appartient le noeud prédéterminé.

6.   Appareil selon la revendication 5, dans lequel l'appareil est configuré pour initialiser les paramètres des fonctions de décision des noeuds à des valeurs conduisant à décider de manière inévitable d'exécuter l'opération de codeur associée au niveau d'arbre auquel appartient le noeud respectif.

7.   Appareil selon l'une quelconque des revendications 1 à 6, dans lequel l'appareil est configuré pour répéter de manière cyclique les trois déterminations et la modification avec des noeuds de l'arbre de décision qui pointent en séquence vers le noeud prédéterminé dans un ordre qui parcourt l'arbre de décision d'une extrémité de feuille à la racine d'arbre de l'arbre de décision.

8.   Appareil selon l'une quelconque des revendications 1 à 7, dans lequel l'appareil est configuré pour gérer un autre ensemble d'opérations de codeur et un autre arbre de décision par d'autres fonctions de décision appartenant à des sous-segments par une opération de codeur prédéterminée parmi l'ensemble d'opérations de codeur impliquant le fait de subdiviser un segment en sous-segments, dans lequel l'appareil est configuré pour effectuer les trois déterminations et la modification en ce qui concerne l'autre arbre de décision avant l'arbre de décision.

9.   Appareil selon l'une quelconque des revendications 1 à 8, dans lequel l'appareil est configuré pour normaliser l'ensemble de caractéristiques de manière à présenter une moyenne zéro et un écart type prédéterminé.

10.  Codeur configuré pour coder un signal multimédia (10) en unités de segments (12), dans lequel le codeur est configuré pour coder chaque segment en exécutant au moins une parmi un ensemble (16) d'opérations de codeur (18)

en parcourant en séquence au moins un sous-ensemble conditionnel (20) de l'ensemble (16) des opérations de codeur (18) et, pour chaque opération de codeur du sous-ensemble conditionnel (20),

en réalisant une décision (30) sur le fait d'exécuter l'opération de codeur respective sur base d'une fonction de décision (22) et, si la fonction de décision (22) indique que doit être exécutée l'opération de codeur respective, en exécutant (24) l'opération de codeur respective de manière à obtenir un ensemble (26) de caractéristiques (28), où les arguments (29) de la fonction de décision (22) sur base desquels est réalisée la décision d'exécuter l'opération de codeur respective comprennent les ensembles de caractéristiques obtenus par l'exécution des opérations de codeur précédentes;

en déterminant celle parmi un sous-ensemble exécuté (37) de l'ensemble (16) des opérations de codeur qui a pour résultat une représentation codée (36) du segment respectif (12) qui est extrême en termes d'un critère d'optimisation prédéterminé; et

en utilisant la représentation codée de l'opération de codeur déterminée pour coder le segment respectif, dans lequel les paramètres de la fonction de décision sont déterminés par l'appareil selon la revendication 1.

**11.** Codeur selon la revendication 10, dans lequel la fonction de décision (22) est une inégalité linéaire.

**12.** Codeur selon la revendication 10 ou 11, dans lequel l'ensemble (26) de caractéristiques (28) varie en fonction de l'opération de codeur par laquelle est obtenu l'ensemble (26) de caractéristiques (28).

**13.** Codeur selon l'une quelconque des revendications 10 à 12, dans lequel l'ensemble (26) de caractéristiques (28) comprend un ou plusieurs parmi

une longueur (42) d'une représentation codée (36) résultant du codage du segment respectif à l'aide de l'opération de codeur à partir de laquelle est obtenu l'ensemble (26) de caractéristiques (28);
une erreur de codage d'une représentation codée (36) résultant du codage du segment respectif à l'aide de l'opération de codeur à partir de laquelle est obtenu l'ensemble (26) de caractéristiques (28);
une mesure pour une invariance transposée du segment respectif;
un drapeau indiquant si l'opération de codeur à partir de laquelle est obtenu l'ensemble (26) de caractéristiques (28) a pour résultat une représentation codée (36) dans laquelle est codé un résidu de prédiction non zéro des échantillons du segment respectif;
une mesure mesurant une faible grandeur d'une erreur de codage résultant du codage du segment respectif à l'aide de l'opération de codeur à partir de laquelle est obtenu l'ensemble de caractéristiques en adoptant les modes de prédiction utilisés dans un voisinage du segment respectif; et
un ensemble d'une ou plusieurs valeurs indicatives d'une différence dans une erreur de codage résultant du codage de sous-segments du segment respectif en adoptant un candidat commun des modes de prédiction utilisés dans un voisinage du segment respectif ou en adoptant, de manière individuelle pour chaque sous-segment, un candidat individuel des modes de prédiction utilisés au voisinage du segment respectif.

**14.** Codeur selon l'une quelconque des revendications 10 à 13, dans lequel l'ensemble (26) de caractéristiques (28) est obtenu par logarithmisation.

**15.** Codeur selon l'une quelconque des revendications 10 à 14, dans lequel l'ensemble des opérations de codeur comprend les modes de codage dont l'exécution a pour résultat, en plus de l'ensemble de caractéristiques, une représentation codée (36) du segment respectif, dans lequel le sous-ensemble conditionnel (20) comprend au moins un des modes de codage.

**16.** Codeur selon l'une quelconque des revendications 10 à 15, dans lequel le critère d'optimisation prédéterminé dépend d'un taux de codage (R) et d'une distorsion de codage (D).

**17.** Codeur selon l'une quelconque des revendications 10 à 16, dans lequel le codeur est configuré pour diviser spatialement, en cas d'exécution du segment respectif à l'aide de l'une prédéterminée de l'ensemble des opérations de codeur, le segment respectif en sous-segments (200) et pour effectuer, pour chaque sous-segment (200), le fait de le parcourir en séquence et de déterminer en ce qui concerne un ensemble futur (204) d'opérations de codeur.

**18.** Codeur selon l'une quelconque des revendications 10 à 17, dans lequel le codeur comprend un mode d'apprentissage, dans lequel le codeur est configuré pour, s'il est en mode d'apprentissage,

réaliser la décision d'exécuter tout le sous-ensemble conditionnel (20) des opérations de codeur, et
déterminer, pour chacune des opérations de codeur exécutées, une consommation de temps nécessaire pour effectuer l'opération de codeur respective, et

sortir l'ensemble (112) de caractéristiques et la consommation de temps pour toutes les opérations de codeur exécutées vers un appareil pour l'amélioration de la fonction de décision.

19. Codeur selon l'une quelconque des revendications 10 à 18, dans lequel le codeur supporte une réinitialisation des paramètres de la fonction de décision (22).

20. Procédé de configuration d'un ou plusieurs codeurs à l'aide d'un apprentissage de renforcement, comprenant:

une interface d'entrée (102) destinée à recevoir des exemples d'apprentissage (106), chaque exemple d'apprentissage (106) se rapportant à une tâche de codage d'un segment respectif (12) d'un signal multimédia respectif (10) par un ou plusieurs codeurs, où chaque exemple d'apprentissage (106) comprend, pour chacune d'un ensemble d'opérations de codeur supportées par les un ou plusieurs codeurs,

un ensemble de caractéristiques (x) obtenu en exécutant l'opération de codeur respective en ce qui concerne le segment respectif, et
un temps (c) consommé par l'exécution de l'opération de codeur respective en ce qui concerne le segment respectif, et
une valeur d'efficacité de codage (j) indicative d'une efficacité de codage de l'utilisation de l'opération de codeur respective pour coder le segment respectif en une représentation codée en termes de critère d'optimisation prédéterminé;

un processeur (114) configuré pour fonctionner sur un arbre de décision (116) qui correspond à une séquence de décisions en ce qui concerne l'ensemble des opérations de codeur de sorte que les noeuds de l'arbre de décision appartenant à un niveau d'arbre appartiennent à une décision en ce qui concerne l'une de l'ensemble des opérations de codeur, chaque noeud de l'arbre de décision présentant, y associée, une fonction de décision (22) dont la valeur indique si l'opération de codeur associée au niveau d'arbre auquel appartient le noeud respectif doit être exécutée, et dont les attributs comprennent les ensembles de caractéristiques obtenus par les opérations de codeur pour lesquelles la décision prise selon les fonctions de décision des noeuds intermédiaires connectant le noeud respectif à un noeud de racine de l'arbre de décision, et le noeud de racine, indique que l'opération de codeur respective doit être exécutée, où le processeur (114) est configuré pour fonctionner sur l'arbre de décision
en déterminant (115) un sous-ensemble (124) des exemples d'apprentissage pour lesquels, lors de l'application des paramètres actuels des fonctions de décision des noeuds de l'arbre de décision, l'arbre de décision est parcouru le long d'un trajet de noeuds de sorte que les noeuds du trajet comprennent un noeud prédéterminé;
en déterminant (125), pour chacun du sous-ensemble (124) d'exemples d'apprentissage,

une première valeur de récompense pour un premier sous-trajet (128) parcouru en appliquant la fonction de décision actuelle des noeuds de l'arbre de décision dans un premier sous-arbre de l'arbre de décision présentant un premier successeur du noeud prédéterminé, comme noeud de racine d'arbre, et
une deuxième valeur de récompense pour un deuxième sous-trajet parcouru lors de l'application de la fonction de décision actuelle des noeuds de l'arbre de décision dans un deuxième sous-arbre de l'arbre de décision présentant un deuxième successeur du noeud prédéterminé comme noeud de racine d'arbre, dans lequel les première et deuxième valeurs de récompense sont calculées sur base des temps consommés et des valeurs d'efficacité de codage des opérations de codeur indiquées comme étant à exécuter respectivement par les noeuds du trajet du noeud de racine jusqu'au noeud prédéterminé, et les nœuds dans les premier et deuxième sous-trajets,

en déterminant (135) les paramètres optimisés pour la fonction de décision (22) du noeud prédéterminé qui optimisent une récompense pour le sous-ensemble d'exemples d'apprentissage sur base des première et deuxième valeurs de récompense déterminées pour le sous-ensemble d'exemples d'apprentissage, et
en modifiant (136) les paramètres actuels de la fonction de décision du noeud prédéterminé sur base des paramètres optimisés.

21. Procédé de codage d'un signal multimédia (10) en unités de segments (12), dans lequel le codeur est configuré pour coder chaque segment en exécutant au moins l'une d'un ensemble (16) d'opérations de codeur (18), le procédé comprenant le fait de

parcourir en séquence au moins un sous-ensemble conditionnel (20) de l'ensemble (16) des opérations de codeur (18) et, pour chaque opération de codeur du sous-ensemble conditionnel (20),

réaliser une décision (30) sur le fait d'exécuter l'opération de codeur respective sur base d'une fonction de décision (22) et, si la fonction de décision (22) indique que l'opération de codeur respective doit être exécutée, exécuter (24) l'opération de codeur respective de manière à obtenir un ensemble (26) de caractéristiques (28), où les arguments (29) de la fonction de décision (22) sur base desquels est réalisée la décision d'exécuter l'opération de codeur respective comprennent les ensembles de caractéristiques obtenus par l'exécution des opérations de codeur précédentes;

déterminer celle parmi un sous-ensemble exécuté (37) de l'ensemble (16) des opérations de codeur qui a pour résultat une représentation codée (36) du segment respectif (12) qui est extrême en termes d'un critère d'optimisation prédéterminé; et

utiliser la représentation codée de l'opération de codeur déterminée pour coder le segment respectif,

dans lequel les paramètres de la fonction de décision sont déterminés par le procédé selon la revendication 20.

22. Programme d'ordinateur présentant un code de programme pour réaliser, lorsqu'il est exécuté sur un ordinateur, un procédé selon la revendication 20 ou 21.

Fig. 1

Fig. 2

Fig. 3

**Algorithm 1** Policy update algorithm

1: **procedure** UPDATE($\pi$, $L_s$, M, $\alpha$, $\mu$)
2:     **for** $t \leftarrow H - 1, 0$ **do**
3:         **for** all s with $t_s = t$ **do**
4:            $X \leftarrow \langle (x_{i,t})_{t \in E_s} \rangle_{i \in L_s}$   ▷ Stack into Matrix
5:            $r_0 \leftarrow (\hat{Q}^{\pi^t_s}(i, s, \alpha_0))_{i \in L_s}$
6:            $r_1 \leftarrow (\hat{Q}^{\pi^t_s}(i, s, \alpha_1))_{i \in L_s}$
7:            $\theta'_s \leftarrow \text{CLR}(X, r_0, r_1)$
8:            $\theta_s \leftarrow \alpha \theta'_s + (1 - \alpha)\theta_s$
9:         **end for**
10:     **end for**
11:     **return** $\pi$
12: **end procedure**

# Fig. 4

**Algorithm 2** Cost sensitive, binary classifier learner

1: **procedure** CLR($X$, $r_0$, $r_1$)
2:     $y \leftarrow (r_1 < r_0)$
3:     $w \leftarrow (|r_1 - r_0|)$
4:     $\hat{X}, \hat{y} \leftarrow \text{sample}(X, y, w, S)$
5:     $\theta \leftarrow \text{LR}(\hat{X}, \hat{y})$
6:     **return** $\hat{\theta}$
7: **end procedure**

# Fig. 5

**Algorithm 3** Overall learning algorithm

---

1:  **procedure** LEARN(M, $\mu$)

2:      $\forall s : \theta_s \leftarrow 0$               ▷Initialize $\pi$

3:      $\forall s : L_s \leftarrow \{1..M\}$       ▷Select all nodes

4:      **for** $\alpha$ **in** $\langle 1, 1, 1, .4, .4, .4, .4 \rangle$ **do**

5:          $\pi \leftarrow$ UPDATE($\pi, L_{\{s\}}, M, \alpha, \mu$)

6:          $\forall s : L_s \leftarrow \{i \mid s \in h^{\pi,i}\}$    ▷Select visited nodes

7:      **end for**

8:      **return** $\pi$

9:  **end procedure**

10: **procedure** IMPROVE($\Pi, \mu_z$)

11:     $\Pi = \bigcup \pi_z$

12:     $\mathcal{QP}$                   ▷A set of QP values

13:     **for** blockSize $\leftarrow \langle 8, 16, 32, 64 \rangle$ **do**

14:         **for** (QP,level) $\leftarrow \mathcal{QP} \times \{0..3\}$ **do**

15:            $z \leftarrow (0, QP, level, blockSize)$

16:            $M_z \leftarrow$ Enc($\Pi, z$)

17:         **end for**

18:         **for** $(z, M) \in S$ **do**

19:            $\pi_z \leftarrow$ Learn($M, \mu_z$)

20:         **end for**

21:     **end for**

22:     **return** $\Pi$

23: **end procedure)**

---

## Fig. 6

Fig. 7

Fig. 8

Fig. 9

Fig. 10

Fig. 11

EP 3 556 098 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Fast Mode and Partition Decision Using Machine Learning for Intra-Frame Coding in HEVC Screen Content Coding Extension. **DUANMU FANYI et al.** IEEE JOURNAL ON EMERGING AND SELECTED TOPICS IN CIRCUITS AND SYSTEMS. IEEE, 01 December 2016, vol. 6, 517-531
- **F. BOSSEN.** Common test conditions and software reference configurations. *Document JCTVC-L1100, Geneva, Switzerland,* 2013
- **K. WON H ; LEE J. YANG ; J. KIM ; B. JEON.** Early skip detection for hevc. *Document JCTVC-G543, Geneva, Switzerland,* 2011
- **A. HEINDEL ; T. HAUBNER ; A. KAUP.** Fast cu split decisions for hevc inter coding using support vector machines. *Picture Coding Symposium, Nuremberg, Germany,* December 2016

- **MICHAEL J. KEARNS ; YISHAY MANSOUR ; ANDREW Y. NG.** Approximate planning in large pomdps via reusable trajectories. *Advances in Neural Information Processing Systems 12, [NIPS Conference, Denver, Colorado, USA,* 29 November 1999, 1001-1007
- **J. LANGFORD ; J. LANGFORD B. ZADROZNY.** *Reducing t-step reinforcement learning to classification*
- **J. VANNE ; M. VIITANEN ; T. D. HÄMÄLÄINEN.** Efficient mode decision schemes for hevc inter prediction. *IEEE Transactions on Circuits and Systems for Video Technology,* September 2014, vol. 24 (9), 1579-1593
- **B. ZADROZNY N. ABE ; J. LANGFORD.** *Cost-sensitive learning by cost-proportionate example weighting,* 2003